(19) Europäisches Patentamt
European Patent Office
Office européen des brevets

(11) EP 1 323 805 A1

(12) EUROPEAN PATENT APPLICATION
published in accordance with Art. 158(3) EPC

(43) Date of publication:
02.07.2003 Bulletin 2003/27

(51) Int Cl.7: C09K 3/18, C09D 201/00, C09D 5/00

(21) Application number: 01967689.9

(22) Date of filing: 14.09.2001

(86) International application number:
PCT/JP01/08027

(87) International publication number:
WO 02/022758 (21.03.2002 Gazette 2002/12)

(84) Designated Contracting States:
AT BE CH CY DE DK ES FI FR GB GR IE IT LI LU MC NL PT SE TR

(30) Priority: 14.09.2000 JP 2000279653
02.04.2001 JP 2001103031

(71) Applicant: Sekisui Jushi Kabushiki Kaisha
Osaka-shi, Osaka 530-0047 (JP)

(72) Inventors:
• YASUI, Katsumi
c/o SEKISUI JUSHI KABUSHIKI KAISHA
Gamoh-gun, Shiga 520-2596 (JP)
• ITAKURA, Shintaro
SEKISUI JUSHI KABUSHIKI KAISHA
Gamoh-gun, Shiga 520-2596 (JP)

(74) Representative: Harland, Linda Jane
c/o Reddie & Grose
16 Theobalds Road
London WC1X 8PL (GB)

(54) **SNOW SLIDING ICY COATING**

(57) A covering has a property of allowing an accretion of snow to slide and comprises a coating layer formed on a surface of a substrate in order to prevent accretion of snow and ice. As for the coating layer, its external surface has such wettability that a contact angle relative to water is 70 degrees or greater, and also has such water sliding property that a waterdrop sliding angle is 40 degrees or less. Alternatively, the external surface of the coating layer has such water repellency that a surface tension is 35 dyne/cm or less, and also has such water sliding property that a waterdrop sliding angle is 40 degrees or less.

Fig.6

Table 6

| Base material for substrate[1] | Surface tension (dyne/cm) | Water sliding angle (°) | Waterdrop sliding properties[2] | Advancing contact angle[2] (°) | Receding contact angle[2] (°) | Waterdrop sliding speed (cm/min) | Maximum surface roughness (μm) |
|---|---|---|---|---|---|---|---|
| Example 1 | PC plate | 12 | 15 | A | 115 | 60 | 6 | 0.4 |
| Example 2 | PC plate | 12 | 10 | A | 115 | 60 | 6 | 0.4 |
| Example 3 | PC plate | 16 | 20 | A | 120 | 65 | 6 | 0.2 |
| Example 4 | PC plate | 14 | 20 | A | 119 | 65 | 6 | 0.2 |
| Example 5 | PC plate | 14 | 20 | A | 120 | 65 | 6 | 0.2 |
| Example 6 | PC plate | 15 | 25 | A | 120 | 70 | 6 | 0.2 |
| Example 7 | PC plate | 16 | 31 | A | 105 | 75 | 4 | 0.2 |
| Example 8 | glass | 14 | 20 | A | 120 | 70 | 2 | 0.2 |
| Example 9 | PC plate | 18 | 15 | A | 105 | 80 | 10 | 3.0 |
| Example 10 | PC plate | 17 | 34 | A | 120 | 50 | 6 | 0.4 |
| Example 11 | Al plate | 12 | 15 | A | 115 | 60 | 6 | 0.2 |
| Example 12 | Al plate | 16 | 10 | A | 120 | 65 | 6 | 0.2 |
| Example 13 | Al plate | 14 | 20 | A | 120 | 65 | 6 | 0.2 |
| Example 14 | Al plate | 14 | 20 | A | 120 | 70 | 5 | 0.2 |
| Example 15 | Al plate | 15 | 25 | A | 105 | 75 | 4 | 0.2 |
| Example 16 | Al plate | 16 | 31 | A | 120 | 70 | 2 | 0.2 |
| Example 17 | Al plate | 16 | 15 | A | 120 | 75 | 6 | 0.2 |
| Example 18 | Al plate | 18 | 15 | A | 105 | 70 | 4 | 0.2 |
| Example 19 | Al plate | 18 | 25 | B | 105 | 80 | 2 | 0.4 |
| Comp. Ex. 1 | PC plate | not greater than 10 | 1 | B | 160 | 159 | not less than 250 | 1.0 |
| Comp. Ex. 2 | PC plate | not greater than 10 | 35 | B | 125 | 55 | 90 | 1.0 |
| Comp. Ex. 3 | glass | not greater than 10 | 35 | B | 125 | 55 | 90 | 3.0 |
| Comp. Ex. 4 | PC plate | not greater than 10 | 40 | B | 148 | 145 | not less than 250 | 1.0 |
| Comp. Ex. 5 | PC plate | not greater than 10 | 7 | B | 125 | 55 | 150 | 12 |
| Comp. Ex. 5a | Al plate | 20 | 35 | B | 125 | 55 | 90 | 0.2 |
| Comp. Ex. 7 | Al plate | not greater than 10 | 20 | B | 120 | 40 | 6 | 3.0 |
| Comp. Ex. 8 | Al plate | not greater than 10 | 40 | B | 148 | 145 | not less than 250 | 12 |
| Comp. Ex. 9 | Al plate | not greater than 10 | 7 | B | 125 | 55 | 90 | 0.2 |
| Comp. Ex. 10 | Al plate | 17 | 34 | A | 120 | 55 | 150 | 8.0 |
| Comp. Ex. 11 | Al plate | 39 | 41 | B | 120 | 120 | 4 | 0.2 |
| Comp. Ex. 12 | Al plate | 21 | 35 | B | 110 | 60 | 8 | 9.0 |
| Comp. Ex. 13 | glass | 58 | 20 | A | 40 | 8 | not less than 250 | — |

*[1] PC plate: polycarbonate plate.
*[2]A: The waterdrop slid down.
B: The waterdrop rolled down.

EP 1 323 805 A1

Table 6 (continued)

| | Length of straight-chain water repellent materials(Å) | Area proportion of water repellent materials(%) | Test for ice shearing/adhesion force | | Snow/Ice accretion rate (%) | Surface tension after snow/ice accretion test (dyne/cm) |
|---|---|---|---|---|---|---|
| | | | Ice movement condition*3 | Maximum load ( N／cm² ) | | |
| Example 1 | 15 | 95 | A | 12 | 2 | 13 |
| Example 2 | 18 | 95 | A | 5 | 2 | 13 |
| Example 3 | 20 | 90 | A | 12 | 3 | 17 |
| Example 4 | 25 | 91 | A | 12 | 3 | 15 |
| Example 5 | 25 | 95 | A | 12 | 3 | 15 |
| Example 6 | 25 | 70 | A | 7 | 2 | 17 |
| Example 7 | 25 | 30 | A | 20 | 2 | 20 |
| Example 8 | 25 | 95 | A | 7 | 2 | 16 |
| Example 9 | 5 | 70 | A | 3 | 1 | 19 |
| Example 10 | 10 | 95 | A | 25 | 10 | 18 |
| Example 11 | 15 | 95 | A | 12 | 2 | 13 |
| Example 12 | 18 | 95 | A | 5 | 2 | 13 |
| Example 13 | 20 | 90 | A | 12 | 3 | 17 |
| Example 14 | 25 | 91 | A | 12 | 3 | 15 |
| Example 15 | 25 | 70 | A | 12 | 3 | 15 |
| Example 16 | 25 | 40 | A | 7 | 2 | 17 |
| Example 17 | 25 | 20 | A | 20 | 2 | 20 |
| Example 18 | 25 | 50 | A | 3 | 1 | 19 |
| Example 19 | 5 | 95 | A | 20 | 5 | 19 |
| Comp. Ex. 1 | — | 100 | B | 0.5 | 30 | 55 |
| Comp. Ex. 2 | 3 | 100 | B | 20 | 50 | 11 |
| Comp. Ex. 3 | 25 | 100 | B | 20 | 60 | 25 |
| Comp. Ex. 4 | 2 | 100 | B | 30 | 50 | not greater than 10 |
| Comp. Ex. 5 | 2 | 60 | B | 1.5 | 35 | 18 |
| Comp. Ex. 6a | 3 | 100 | B | 20 | 50 | 11 |
| Comp. Ex. 7 | 25 | 70 | A | 7 | 15 | 45 |
| Comp. Ex. 8 | 2 | 100 | B | 30 | 50 | 25 |
| Comp. Ex. 9 | 2 | 60 | B | 1.5 | 35 | not greater than 10 |
| Comp. Ex. 10 | 3 | 95 | A | 25 | 15 | 18 |
| Comp. Ex. 11 | 25 | 8 | A | 25 | 20 | 42 |
| Comp. Ex. 12 | — | — | B | 60 | 60 | 48 |
| Comp. Ex. 13 | — | — | A | 25 | 80 | 50 |

Results of evaluation tests / Snow/Ice accretion test

*3A: constant-load, unfractured sliding movement
B: fractured detachment

Fig.6

EP 1 323 805 A1

## Description

## TECHNICAL FIELD

The present invention relates to a covering with snow and ice sliding properties, which prevents accretion of snow and ice on structures in cold snowy areas, specifically, outdoor structures exposed to snow and ice, for example, road safety structures such as signals, road signs, delineators, noise walls and protective fences, architectural structures such as roofs, exterior walls and fences, telecommunication facilities, and others.

## BACKGROUND ART

In cold snowy areas, accretion of snow and ice brings about various damages and troubles in civil life and industrial activities. To give some examples, when snow builds up on an electric wire, the snow may break the electric wire or cause collapse of a pylon, so that power supply may be disrupted in extensive areas. In a different situation where snow is blown up by a running train, the snow may adhere to pantographs or the bottom of carriages and may obstruct operation of the train. What is worse, if snow and ice accrues on a section related to recognition of field conditions (e.g. carriage windows), the snow and ice narrows or blinds driver's view, which may result in collision with a structure or a traffic accident.

In another situation, once snow and ice accrues on a road sign, bridge or the like, the attached snow and ice grows gradually and gets heavier. Finally, when the weight exceeds the adhesion forces, the snow and ice falls down in a mass. As known, where snow and ice contains a trace of moisture, the hydrogen bonding forces and the van der Waals forces deriving from the moisture permit the snow and ice to grow into a considerably heavy mass. Should the mass of snow and ice be released and fall down from a road sign, bridge or the like, a vehicle or a pedestrian passing thereunder could be involved in a disaster.

Further, snow and ice accrues on bridge girders, pylons, vehicles, aircraft, telecommunication facilities, road traffic signs, noise walls, building roofs, side walls, and signals. Moreover, ice accrues around snow flowing gutters or snow disposal slots, and clogs them. These incidents can cause accidents or troubles which may threaten our lives. Under such circumstances, a reliable, high-performance technique for prevention of snow/ice accretion has been desired from diverse fields.

Among the conventional measures for preventing snow/ice accretion, use of a heating element (e.g. heater) has been adopted as an effective method. However, its equipment cost is far from economical, and an enormous cost and labor is still required for the energy such as electricity and maintenance of equipment. Besides, in the case where a synthetic resin or the like which is vulnerable to heat is employed, thermal deformation and similar troubles may occur. Although build-up of snow and ice may be physically wiped off, this physical process cannot achieve satisfactory removal of firmly attached snow and ice. Besides, an extra cost and labor is necessary for replacement of a worn-out scraper. It should be further borne in mind that, when snow melts, snow melt water forms icicles, on which snow accrues. Hence, satisfactory effects cannot be expected unless heating elements are disposed both at required points and along the periphery of the structure. Accordingly, this method is also problematic as to facilities and their maintenance.

Given the circumstances, various inventions have suggested methods for preventing accretion of snow and ice. As disclosed in Japanese Patent Laid-open Publication Nos. H7-331122, H9-279056, H10-88061, H11-297228, to name a few, a substrate is coated with a water repellent coating composition whose major component is a fluororesin and the like. These techniques concern maximum improvement in water repellent performance of a coating composition. From this point of view, the external surface of a substrate is covered with a coating layer composed of a super water repellent film, whereby this coating layer is supposed to prevent snow/ice accretion. As known, build-up of snow and ice results from hydrogen bonds and van der Waals forces generated between the external surface of a coating layer and the snow and ice. Therefore, in an attempt to prevent snow/ice accretion, these techniques constitute the external surface of the coating layer with a super water repellent film, thereby minimizing the relevant forces.

Indeed, such a coating layer gives a fair effect of preventing snow/ice accretion for a while after installation in the outdoor environment. However, after about several weeks of installation, the water repellent performance declines, for example, due to deposition of contaminants on the external surface of the coating layer and due to deterioration of the coating layer itself. Regrettably, the effect of preventing snow/ice accretion disappears in due course.

Another conventional technique is suggested by Japanese Patent Laid-open Publication No. H10-237431. According to this method, fine particles of a photocatalyst are mixed into a water repellent coating layer. Since contaminants attached to the external surface of the coating layer are decomposed through the catalyzed redox reaction, this method keeps the super water repellency and the effect of preventing snow/ice accretion. In this method, however, the redox reaction with the photocatalyst particles induces decomposition of not only the contaminants but also the water repellent coating layer itself. Eventually, the coating film itself may deteriorate early. To make matters worse, while exposed at the external surface of the coating layer, the photocatalyst particles turn hydrophilic and even promote accretion of snow and ice.

From a different point of view, the external surface of the coating layer should have a certain degree of smoothness. With a smooth external surface, when an accretion of snow and ice starts to melt and forms a water layer between the snow/ice and the external surface of the coating layer, the snow/ice is expected to slide down from the external surface of the coating layer. Namely, an accretion of snow and ice is expected to slide down and to be removed from the external surface of the coating layer. On the contrary, a super water repellent film does not allow snow and ice to slide down smoothly. This is not only because its water repellency inhibits formation of a water layer on the external surface, but also because the super water repellent layer is a non-continuous film whose external surface includes a number of microscopic convexities and concavities. Further, in order to obtain an external surface with a certain degree of smoothness, fine particulates or the like have to be mixed into the coating composition. This process involves difficult handlability in the coating operation, a short pot life, and many other problems. In addition, the process is complicated and extremely costly.

The present invention intends to eliminate the deficiencies in the prior art mentioned above. It is an object of the present invention to provide a covering with snow and ice sliding properties which can develop an effect of preventing snow/ice accretion, by allowing snow and ice which is attached to a substrate to slide down quickly and thus reducing the snow/ice accretion time to a shortest possible period. It is also an object of the present invention to provide such a covering with snow and ice sliding properties which can be materialized on a substrate in a simple and inexpensive manner.

**DISCLOSURE OF THE INVENTION**

To solve the above problems, a covering with snow and ice sliding properties, corresponding to Claim 1 of the present invention, has a property of allowing an accretion of snow to slide and comprises a coating layer formed on a surface of a substrate in order to prevent accretion of snow and ice, characterized in that an external surface of the coating layer has such wettability that a contact angle relative to water is 70 degrees or greater, and also has such water sliding property that a waterdrop sliding angle is 40 degrees or less (corresponding to Claim 1 and hereinafter mentioned as Invention 1).

In the covering with snow and ice sliding properties according to the present invention, the coating layer has such wettability that the angle relative to water is 70 degrees or greater, and also has such water sliding properties that a waterdrop sliding angle is 40 degrees or less. This arrangement imparts snow/ice sliding properties to the external surface of the coating layer. Consequently, it is possible to alleviate accretion of snow and ice and to allow attached snow and ice to slide down.

The term "snow/ice sliding properties" as used herein means such properties that allow snow and ice to slide down, with the same part of the snow and ice touching the external surface of the coating layer. In other words, snow and ice is allowed to slide down just as a sledge slides on the snow surface. While snow and ice builds up on the surface which has snow/ice sliding properties, a trace of moisture is present between the surface and the snow/ice, letting the snow and ice slide down from the surface under its own weight. According to the present invention, the external surface of the coating layer is arranged to have such wettability that a contact angle relative to water is 70 degrees or greater. This arrangement suppresses the forces of snow and ice to adhere to the external surface of the coating layer (i.e. hydrogen bonding forces, van der Waals forces, etc. which derive from a trace of moisture contained in the snow and ice). At the same time, the waterdrop sliding angle is arranged to be 40 degrees or less, thereby allowing the snow and ice to slide down under its own weight by means of a trace of moisture contained in itself. Incidentally, the waterdrop sliding angle is measured in the following manner. First of all, a waterdrop is dropped on the surface of the coating layer. After the waterdrop becomes stationary, the covering is tilted gradually. When the waterdrop starts to move, the tilt angle of the covering is determined as the waterdrop sliding angle.

According to the arrangement of the present invention, even when snow and ice builds up on the external surface of the covering, the attached snow and ice is allowed to slide down quickly, owing to the snow/ice sliding properties imparted to the external surface of the coating layer. Therefore, the water repellency at the super water repellent level is not required in preventing accretion of snow and ice. In fact, attached snow and ice is made to slide down quickly in a simple, inexpensive manner, so that the snow/ice accretion time can be reduced to a shortest possible period. In this way, it is possible to suppress accretion of snow and ice.

Even when contaminants are attached to the external surface of the covering, it is improbable that the contaminant particles spread evenly over the entire external surface of the coating layer. Since the area with snow/ice sliding properties remains exposed on a microscopic scale, the snow/ice sliding properties are not so seriously impaired. Besides, even if the coating film deteriorates, the decline of the coating performances is much gentler in comparison with a super water repellent coating film. Therefore, the coating film can maintain the effect of preventing snow/ice accretion for a much longer period than a super water repellent coating film.

In the present invention, the external surface of the coating layer has such wettability that a contact angle relative to water is 70 degrees or greater. Preferably, the contact angle relative to water is 90 degrees or greater. In the presence of a trace of water contained in snow and ice, if the contact angle is below 70 degrees, the forces of the moisture to adhere to the external surface of the coating layer cannot be reduced to such a small level as to develop snow/ice sliding properties.

Further, the waterdrop sliding angle is 40 degrees or less, preferably 30 degrees or less. If the waterdrop sliding angle exceeds 40 degrees, snow and ice attached to the external surface of the coating layer does not slide down readily under its own weight. In addition, the external surface of the covering needs water sliding properties. To be specific, water sliding properties allow a waterdrop to move (i.e. to slide down) along the external surface of the coating layer, with the same part of the waterdrop touching the external surface of the covering. This makes a contrast to the case of "rolling down". On a surface of a covering which lets a waterdrop move in a rolling manner, if the moisture content in the snow and ice is so little, the moisture can neither form a waterdrop nor move independently of the snow and ice. In this situation, it is impossible to expect the snow/ice sliding properties.

With respect to the above arrangement, the coating layer preferably shows a maximum surface roughness of 10 μm or less (Claim 2). Maximum surface roughness is understood to be the difference of height between convexities and concavities which are microscopically observed on the external surface of the coating layer. Excellent snow/ice sliding properties can be assured if the maximum difference on the external surface of the coating layer is not greater than 10 μm. In contrast, if the external surface includes microscopic convexities and concavities with a height difference over 10 μm, development of snow/ice sliding properties is hampered for the following reasons. Firstly, the convexities and concavities interfere with smooth sliding movement of snow and ice. Secondly, owing to the water repellency of air which is trapped in the concavities, a trace of moisture at the snow/ice surface is absorbed into the snow and ice. Nevertheless, as far as the maximum surface roughness is not greater than 10 μm, those influences on the snow/ice sliding properties are hardly recognizable.

Preferably, the coating layer allows ice to slide in an unfractured manner under a constant load which is applied horizontally relative to the coating layer, with a proviso that the ice has frozen stuck to the external surface of the coating layer within a temperature range from -2°C to -5°C (Claim 3). In this context, the term "to freeze stuck" should be understood in the following sense. For example, where snow is attached to the surface of the covering, the snow melts due to the heat of the covering itself and creates a water layer between the snow and the surface of the covering. Later, the water layer cools and freezes at outdoor temperatures. This process is expressed by the term "to freeze stuck". Thus, in the above example, the snow freezes stuck to the surface of the covering. To put it another way, while water "freezes", it keeps touching the surface of the covering.

Under an actual installation environment, the maximum snow/ice adhesion forces are observed at outdoor temperatures in the range of -2°C to -5°C. Within this temperature range, snow and ice contains the greatest amount (although slight) of moisture, which maximizes the adhesion forces such as hydrogen bonding forces and van den Waals forces deriving from the moisture. These great adhesion forces promote accretion of snow and ice. Where the outdoor temperature is below -5°C, the moisture content at the snow/ice surface is so little as to suppress the chemical adhesion forces. Therefore, an accretion of snow and ice readily falls down from the external surface of the coating layer, when subjected to wind, vibration or the like. On the other hand, where the outdoor temperature is over -2°C, snow and ice does not keep its state and forms a waterdrop. Then, the snow and ice does not attach to the external surface but slides down as a waterdrop.

In the situation represented by the term "to slide in an unfractured manner under a constant load" or "constant-load, unfractured sliding movement", freeze-stuck snow and ice slides on the external surface of the covering under the gravity or an external force acting on the snow/ice itself, without undergoing fracture of the freeze connection at the interface between the external surface of the covering and the snow/ice. This sliding movement can be contrasted with the situation where snow and ice suddenly falls down from the external surface of the covering as the result of fracture of the freeze connection, at a certain moment while the gravity or an external force is applied. Rather, in the former situation, when a certain degree of gravity or external force is applied, snow and ice starts to move in a sliding manner on the external surface of the covering. Throughout this movement, the degree of gravity or external force remains substantially unchanged. When snow and ice is allowed to slide in an unfractured manner under a constant load, the gravity or external force acting thereon is too small to trigger fracture of the freeze connection, but enough to cause the snow and ice to slide down readily under its own weight.

Further regarding the coating layer, it is made of a material which develops water repellency. The major component of this material is any one of or a mixture of a fluorine-containing silane compound, a fluorine-free silane compound, and a fluorine-containing silane compound having a fluorocarbon group, or a mixture thereof (Claim 4). The coating layer is a coating film whose major component is any of the above-mentioned compounds or a mixture thereof. This coating layer is formed by coating a coating composition whose major component is any one of or a mixture of the compounds mentioned above, followed by drying and curing. The fluorine-free silane compound may have a methyl group (Claim 5).

The material which develops water repellency may derive from any optional water repellent agent. Nevertheless, where a substrate is made of polymers such as heat-vulnerable synthetic resins, it is preferable to use water repellent materials which can form a film at low temperatures of 80°C or below so as to avoid adverse influences on the polymer substrate and which can be immobilized on a hydroxide group. As such, it is advisable to use a coating composition whose major component is any one of or a mixture of the compounds named below.

Namely, there may be mentioned fluorinated pitches (CFm m: 1.1-1.6, manufactured by Osaka Gas Co., Ltd.); fluoride resins, specifically, polytetrafluoroethylene (PTFE), tetraethylene-hexafluoropropylene copolymer (PFEP), ethylene-tetrafluoroethylene copolymer (PETFE), tetrafluoro-ethylene-perfluoroalkylvinylether copolymer (PEA), polyvinylidenefluoride (PVdF), polyvinyl fluoride (PVF), etc., or fluororesin coating compositions based on these resins; fluorine-containing compounds each having a fluorocarbon group, or fluororesin coating compositions based on these compounds; fluorine-containing silane compounds each having a fluorocarbon group; fluorine-free silane compounds each having a methyl group; or the like.

Preferably, the material which develops water repellency is evenly distributed over 30% to 95% of the total area of an external surface of the substrate (Claim 6).

For improvement of the snow/ice sliding properties, this arrangement advantageously leaves some parts, on a microscopic scale, where the-material which develops water repellency is absent. Presumably, the snow/ice sliding properties are promoted according to the following principle. Water, by nature, has slight intermolecular bonding forces and tends to remain where it is. In this aspect, due to a trace of moisture contained in the snow and ice, the hydrogen bonding forces, the van der Waals forces and the like are generated between the snow/ice and the external surface of the coating layer. However, the powers of such forces are different between the part where water repellent materials are distributed and the part where they are not. The difference unbalances the tendency of the snow/ice to adhere to the external surface of the coating layer and triggers movement of the moisture.

If distribution of the water repellent materials is not higher than 30%, it is difficult to accomplish a contact angle of 70 degrees or greater relative to water, and hence impossible to alleviate accretion of snow and ice. On the other hand, if distribution of the water repellent materials is 95% or higher, it is insufficient to unbalance the snow/ice adhesion forces, and hence impossible to gain the snow/ice sliding properties.

As the coating methods for forming the coating layer, a coating composition containing any of the above water repellent materials is applied by dipping, spin coating, nozzle flow coating, spraying, flow coating, brush coating, roller coating, wipe coating, etc., or a combination thereof. Above all, dipping is suitable because this method can readily realize film uniformity, film thickness control and the like and also because the method can impart smoothness required to develop water sliding properties. In the case of spraying, it is preferable to minimize the discharge amount, discharge pressure, etc. of the coating composition to the limit, depending on the water repellent materials to be coated. A greater amount of discharge results in a curing reaction among the water repellent materials, in which case formation of a uniform coating film is less likely.

Where the material which develops water repellency is evenly distributed over 30% to 95% of the total area of an external surface of the substrate, a hydrophilic material may be distributed on the external substrate surface at a part where the material which develops water repellency is absent (Claim 7).

This arrangement can increase the difference in hydrogen bonding forces and van der Waals forces, thereby enhancing the snow/ice sliding properties still further. Besides, with distribution of a hydrophilic material, contaminants attached to the external surface of the coating layer are simply washed away and removed by rainfall or the like. Accordingly, this arrangement can also prevent a decline of the effect of preventing accretion of snow and ice.

The following hydrophilic agents can be employed as the hydrophilic material. Alternatively, the substrate may be made of glass, metal oxide or the like in order to be hydrophilic by itself.

The typical hydrophilic agent is, for example, a compound represented by $R1aR2bR3cSiX4-a-b-c$, wherein $R1$, $R2$, $R3$ are aliphatic hydrocarbon groups and/or aromatic hydrocarbon groups; a, b, c are 0 to 3; a+b+c is 0 to 3; and X is a hydroxyl group or a hydrolyzable functional group (halogen element, alkoxy group, isocyanate group). By way of example, tetrafunctional silane, wherein a+b+c=0, gives a silica-based thin film at room-temperature and/or through burning. Where a+b+c=1, 2 or 3 (R is a methyl, ethyl, phenyl group or the like) , a silica-based thin film can be obtained by burning the film at a high temperature so as to burn and oxidize the hydrocarbon group R.

As a further example, a hydrophilic silica-based thin film can be obtained by application of a coating composition which is composed of a silicone coating composition based on the above-mentioned silane compounds.

Specific examples include tetramethoxysilane, tetraethoxysilane, tetra-n-propoxysilane, tetra-iso-propoxysilane, tetra-n-butoxysilane, tetra-iso-butoxysilane, tetra-sec-butoxysilane, tetra-tert-butoxysilane, etc. Further examples are tetrachlorosilane, tetra-isocyanatesilane, ethoxysilane tryisocyanate, etc. Additional examples are methyltrimethoxysilane, methyltriethoxysilane, methyltrichlorosilane, ethyltriethoxysilane, ethyltrichlorosilane, phenyltrimethoxysilane, phenyltriethoxysilane, phenyltrichlorosilane, propyltrimethoxysilane, propyltriethoxysilane, propyltrichlorosilane, butyltrimethoxysilane, butyltriethoxysilane, butyltrichlorosilane, hexyltrimethoxysilane, methylsilyl triisocyanate, dimethylsilyl diisocyanate, vinylsilyl triisocyanate, etc.

Furthermore, there may be mentioned dimethyldimethoxysilane, dimethyldiethoxysilane, dimethylvinylmethoxysilane, dimethylvinylchlorosilane, 3-chloropropyltrimethoxysilane, 3-aminopropyltriethoxysilane, N-(2-aminoethyl)-aminopropyltriethoxysilane, 3-glycidoxypropyltrimethoxysilane, 3-mercaptopropyltriethoxysilane, polysilazanes, silazanes, etc. Still further, silicone coating compositions based on these silane compounds can be named as well.

As the coating methods for forming the material which develops hydrophilic properties, the above-mentioned hydrophilic material is applied in the form of a coating composition by dipping, spin coating, nozzle flow coating, spraying, flow coating, brush coating, roller coating, wipe coating, etc., or a combination thereof. Above all, dipping and spraying are suitable because these methods can readily realize film uniformity, film thickness control and the like and also because they can impart smoothness required to develop water sliding properties. In the case of spraying, it is preferable to minimize the discharge amount, discharge pressure, etc. of the coating composition to the limit, thereby suppressing the curing process of the hydrophilic agent and forming a uniform coating film.

The material for the substrate is not particularly limited and may be organic or inorganic. Use can be made of steel, stainless steel, aluminum, zinc and other metals, synthetic resins, paper, wood, stone, glass, bricks, ceramics, rooftiles and other inorganic materials. These materials may be coated with coating compositions based on polyester resins, epoxy resins, urethane resins or the like. Instead, the substrates may be plated with zinc, aluminum, etc. Otherwise, they may be subjected to surface treatment with almite, chromate or the like. Where the water repellent materials permit film formation at 80°C or below, the substrate material may be synthetic resins which are vulnerable to heat, including polycarbonates, polyethylene terephthalates, polymethacrylates, polypropylenes, polyvinyl chlorides, and ABS resins.

Also, a covering with snow and ice sliding properties according to the present invention has a property of allowing an accretion of snow to slide and comprises a coating layer formed on a surface of a substrate in order to prevent accretion of snow and ice, characterized in that an external surface of the coating layer has such water repellency that a surface tension is 35 dyne/cm or less, and also has such water sliding property that a waterdrop sliding angle is 40 degrees or less (corresponding to Claim 8 and hereinafter mentioned as Invention 2).

In this case, the external surface of the coating layer is arranged to show a surface tension of not greater than 35 dyne/cm. This arrangement reduces the forces of snow and ice to adhere to the external surface of the coating layer, namely, hydrogen bonding forces and van der Waals forces deriving from a trace of moisture at the snow/ice surface and generated between the snow/ice and the external surface of the coating layer. The decrease of the adhesion forces not only relieves accretion of snow and ice, but also causes the attached snow and ice to nearly float over the external surface of the covering. As for the waterdrop sliding angle, it is arranged to be 40 degrees or less. This arrangement allows the snow and ice to slide down under its own weight by means of a trace of moisture contained in itself.

According to the arrangement of the present invention, even when snow and ice builds up on the external surface of the covering, the attached snow and ice is allowed to slide down quickly, owing to the snow/ice sliding properties imparted to the external surface of the coating layer. Therefore, the water repellency at the super water repellent level is not required in preventing accretion of snow and ice. In fact, attached snow and ice is made to slide down quickly in a simple, inexpensive manner, so that the snow/ice accretion time can be reduced to a shortest possible period. In this way, it is possible to suppress accretion of snow and ice.

Even when contaminants are attached to the external surface of the covering, it is improbable that the contaminant particles spread evenly over the entire external surface of the coating layer. Since the area with snow/ice sliding properties remains exposed on a microscopic scale, the snow/ice sliding properties are not so seriously impaired. Besides, even if the coating film deteriorates, the decline of the coating performances is much gentler in comparison with a super water repellent coating film. Therefore, the coating film can maintain the effect of preventing snow/ice accretion for a much longer period than a super water repellent coating film.

On the other hand, if the surface tension at the external surface of the coating layer exceeds 35 dyne/cm, strong adhesion forces (e.g. hydrogen bonding forces, van der Waals forces) are generated between the external surface of the coating layer and a trace of moisture contained in the snow and ice. These adhesion forces are so strong that the snow and ice cannot slide down under its own weight. Hence, it is difficult to effect sliding movement of the snow and ice. Additionally, in the case where the surface tension is 35 dyne/cm or less but the waterdrop sliding angle is over 40 degrees, snow and ice attached to the external surface of the coating layer is less likely to slide down under its own weight alone.

Furthermore, even if the surface tension is 35 dyne/cm or less and the waterdrop sliding angle is 40 degrees or less, the external surface of the coating layer should have a property of letting a waterdrop slide down. In other words, a waterdrop should move along the external surface of the coating layer, with the same part of the waterdrop touching the external surface of the covering. It should be understood that moisture at the snow/ice surface cannot form a waterdrop if its content is too little, not only because the moisture cannot be released from the snow and ice but also because there is hardly any interfacial gap between the snow/ice and the covering. With this in mind, when the external surface of the covering lets a waterdrop roll down (i.e. move in a rolling manner), it is impossible to expect snow/ice sliding properties under its own weight. For development of still excellent snow/ice sliding properties, it is preferable that the surface tension is 20 dyne/cm or less and that the waterdrop sliding angle is 30 degrees or less.

Preferably, the coating layer has such water sliding properties that a waterdrop slides down along the external surface of the coating layer at an advancing contact angle of 90 degrees or greater, as well as at a receding contact angle of 50 degrees or greater but smaller than the advancing contact angle (Claim 9). In regard to the downward sliding movement of a waterdrop, the advancing contact angle and the receding contact angle represent the balance between the water repellency on the external surface of the coating layer and the intermolecular bonding forces in the waterdrop. Firstly, where the advancing contact angle is smaller than 90 degrees, there is a greater possibility of snow/ice accretion because the adhesion forces between the waterdrop and the external surface of the covering get stronger than the intermolecular bonding forces in the waterdrop. Secondly, where the receding contact angle is smaller than 50 degrees, the possibility of snow/ice accretion increases for the same reason as mentioned for the advancing contact angle. Thirdly, where the receding contact angle is greater than the advancing contact angle, snow/ice sliding properties are impaired because the waterdrop tends to roll down rather than to slide down. For still excellent snow/ice sliding properties, it is more preferable that the advancing contact angle is 100 degrees or greater and that the receding contact angle is 60 degrees or greater but not over the advancing contact angle.

Further, the coating layer is preferred to have such water sliding properties that a waterdrop slides down along the external surface of the coating layer at a waterdrop sliding speed of not faster than 10 cm/min, while the waterdrop slides down 10 centimeters from a start point of such downward sliding movement (Claim 10). For development of the snow/ice sliding properties, a trace of moisture at the snow/ice surface needs to maintain a stable contact with the interface between the snow/ice and the external surface of the coating layer. If a waterdrop is physically unstable on the external surface of the coating layer, the moisture at the snow/ice surface does not touch the external surface of the coating layer sufficiently, which inhibits development of smooth snow/ice sliding properties. As far as the moisture is unstable on the external surface of the coating layer, a waterdrop cannot stay on the external surface of the coating layer in a stable state, and it slides down at a high sliding speed. For this reason, a waterdrop slides down preferably at a speed not faster than 10 cm/min, and more preferably at a speed not faster than 5 cm/min.

With respect to the above arrangement, the coating layer preferably shows a maximum surface roughness of 10 μm or less (Claim 11). The action and effect of this feature are identical to those discussed in connection with the feature of Claim 2. Therefore, detailed description is omitted here.

Preferably, the coating layer allows ice to slide in an unfractured manner under a constant load which is applied horizontally relative to the coating layer, with a proviso that the ice has frozen stuck to the external surface of the coating layer within a temperature range from -2°C to -5°C (Claim 12). The action and effect of this feature are also identical to those discussed in connection with the feature of Claim 1. Therefore, detailed description is omitted here.

The coating layer may be formed on an inorganic base film which is provided on the substrate (Claim 13) . With the presence of the inorganic base film provided on the substrate, the coating layer with snow/ice sliding properties can be formed on various substrates. Irrespective of the type of substrate, which may be surface-treated or not (for example, by coating or plating), it is possible to form the coating layer formed on the inorganic base film. The inorganic base film also functions as a hard-coat layer and protects the substrate from damages.

The inorganic base film may be a transparent coating. Such an inorganic base film permits formation of a coating layer, without impairing the appearance (e.g. color, glossiness) of a surface-treated coating formed by coating, plating or the like. It should be noted that the inorganic base film shows a good adhesion property to both organic coatings and inorganic coatings, and that its functional substrate securely immobilizes the water repellent materials. Therefore, the inorganic base film enables formation of a coating layer which shows high snow/ice sliding properties and high durability.

In the present invention, the inorganic base film to be provided on the external surface of the substrate may itself be, or may be made with use of, glass or a metal oxide such as titanium oxide or alumina. However, the inorganic base film is preferably made with use of silicone, preferably made of a silicone coating composition (Claim 14). Silicone, as the major component of such a silicone coating composition, shows a high adhesion property to the above-mentioned substrate, and can bond well to the water repellent materials. In more detail, the coating made of a silicone coating composition is remarkably strong, because silicone substances are bonded together by a siloxane bond as found in glass. Besides, since silicone contains a great amount of functional groups, the resulting film enables immobilization of the water repellent materials in a simple but firm manner. Moreover, the inorganic base film can be formed easily with use of the silicone coating composition.

For formation of the inorganic base film whose major component is silicone, it is possible to use known silicone coating compositions. They can be applied, for example, by dipping, spin coating, nozzle flow coating, spraying, flow coating, brush coating, roller coating, wipe coating, etc., or a combination thereof. Above all, dipping and spraying are suitable because these methods can readily realize film uniformity, film thickness control and the like and also because they can impart smoothness required to develop water sliding properties.

Preferably, the coating layer contains water repellent materials each having a straight-chain structure of 5 Å or longer, each of the water repellent materials being immobilized on the substrate in such a manner as to orient a terminal thereof to the external surface of the coating layer (Claim 15). More preferably, the coating layer contains straight-chain structures of 10 Å or longer. By immobilizing the water repellent materials having such straight-chain structures, it is possible to reduce the waterdrop sliding speed on the external surface of the coating layer and to develop water sliding properties of a waterdrop.

Each straight-chain water repellent material is immobilized in such a manner as to orient its terminal to the external surface of the coating layer. As a consequence, the external surface of the coating layer looks like a thick-piled carpet on a microscopic scale, wherein the coating layer is a carpet and the straight-chain water repellent materials are piles of the carpet. When a waterdrop falls on the surface of the carpet, it does not penetrate into the upstanding, water repellent piles but rests thereon. If this carpet is tilted as a whole, the upstanding piles bend in the tilted direction under the weight of the waterdrop and promote the start of waterdrop movement, with decreasing the waterdrop sliding angle. Later, while the waterdrop is sliding down along the surface of the tilted carpet, the piles in the path of the waterdrop bend successively in the tilted direction, thereby to maintain the downward sliding movement of the waterdrop. It should be noted that this waterdrop does not roll down but slides down.

This principle applies not only to a waterdrop but also to attached contaminants. The straight-chain water repellent materials, which are much smaller than contaminant particles, prevent the contaminants from penetrating into the coating layer and hold them on the external surface. Eventually, the attached contaminants readily slide down with a waterdrop or snow/ice. Further, the contaminants, which merely rest on the external surface of the coating layer, do not inhibit the bending action of the straight-chain water repellent materials. Hence, attachment of contaminants does not result in a decline of snow/ice sliding properties. Given the fact that the straight-chain water repellent materials shorter than 5 Å cannot bend enough to develop the snow/ice sliding properties, their preferable length is 5 Å or longer. More preferably, the length of the straight-chain water repellent materials may be 10 Å or longer, in which case they tend to bend more readily.

Preferably, the coating layer contains water repellent materials each having a straight-chain structure of 5 Å or longer, more preferably 10 Å or longer, and also having a trifluoromethyl group and/or a methyl group positioned at a terminal thereof, each of the water repellent materials being immobilized on a top surface of the substrate in such a manner as to orient the terminal to the external surface of the coating layer (Claim 16). The trifluoromethyl group and the methyl group are functional groups having water repellency, and they both develop water repellency.

With regard to the straight-chain water repellent materials each having a terminal trifluoromethyl group, the trifluoromethyl group is water repellent and is a large functional group of high polarity. Owing to these properties, the immobilized straight-chain water repellent materials tend to be in the upstanding state by repelling each other at their terminals. Hence, these straight-chain water repellent materials are advantageous for snow/ice sliding properties. Even when the density of the immobilized straight-chain water repellent materials has decreased due to deterioration over time or other reasons, the straight-chain water repellent materials which repel each other at their terminals are less likely to fall flat. Therefore, it is possible to develop snow/ice sliding properties for an extended period with excellent durability.

With regard to the straight-chain water repellent materials each having a terminal methyl group, the methyl group is water repellent and is a relatively small functional group. Owing to these properties, the straight-chain water repellent materials can be densely immobilized on the top surface of the substrate. Besides, since each functional group is relatively small, the straight-chain structures in the water repellent materials are readily mobile. As a result, it is possible to develop high snow/ice sliding properties from the initial stage.

The straight-chain water repellent materials each having a trifluoromethyl group or a methyl group positioned at its terminal may be used alone or in combination as required.

Preferably, one or more of the straight-chain water repellent materials are substantially evenly distributed per 20 square angstrom (Claim 17). Referring again to the earlier description in which the coating layer is compared to a carpet and its piles, if the area per material is over 20 square angstrom, the piles are too scarce to impart excellent snow/ice sliding properties to the external surface of the coating layer as mentioned above.

Preferably, the straight-chain water repellent materials are substantially evenly immobilized on an external surface of the substrate, at a proportion of 10 to 95% relative to a density at which immobilized water repellent materials are saturated (Claim 18). In fact, the density of immobilized water repellent materials has a limit on a microscopic scale, depending on the molecular size, the intermolecular energy or the like. In this regard, the density at which immobilized water repellent materials are saturated, or the saturation density, means the density at which the water repellent materials are immobilized at the maximum. When the straight-chain water repellent materials as mentioned above are immobilized on the external surface of the substrate at the saturation density, the external surface of the coating layer is totally covered by the water repellent materials, based on the size of water molecules. By nature, water has slight intermolecular bonding forces and tends to remain where it is. Similarly, on the surface which holds nothing but the water repellent materials, a trace of moisture contained in snow and ice tends to remain on that surface. As a result, snow/ice sliding properties for the snow and ice attached to this external surface of the coating layer are less likely to develop.

Therefore, sliding movement of snow and ice is promoted further by giving a non-water repellent part as well as the water repellent part. With regard to the hydrogen bonding forces, the van der Waals forces and the like which derive from a trace of moisture contained in the snow/ice and which are generated between the snow/ice and the external surface of the coating layer, the powers of these forces are not the same between these two parts. The difference unbalances the adhesion forces between the snow/ice and the external surface of the coating layer and triggers movement of the moisture. If distribution of the straight-chain water repellent materials is less than 10%, it is difficult to achieve the surface tension of 35 dyne/cm or less. On the other hand, at a distribution rate over 95%, the difference between the two parts is not great enough to unbalance the snow/ice adhesion forces, in which case the effect of promoting snow/ice sliding movement is less likely to develop.

In addition, it is preferable to distribute a hydrophilic material on the external substrate surface at a part where the water repellent materials are absent, namely, where the water repellent materials are not immobilized (Claim 19). This arrangement increases the difference in hydrogen bonding forces and van der Waals forces, thereby capable of enhancing the snow/ice sliding properties. Besides, with distribution of a hydrophilic material, contaminants attached to the external surface of the coating layer are washed away and removed more readily by rainfall or the like. Accordingly, it is also possible to avoid a decline of the effect of preventing snow/ice accretion.

The coating layer concerning Invention 2 as described heretofore is made of a material which develops water repellency. The major component of this material is any one of or a mixture of a fluorine-containing silane compound, a fluorine-free silane compound, and a fluorine-containing silane compound having a fluorocarbon group (Claim 20). The coating layer takes the form of a coating film whose major component is a mixture of the above compounds. This coating layer is formed by coating a coating composition whose major component is any one of or a mixture of the compounds mentioned above, followed by drying and curing.

Specifically, the coating layer concerning Invention 2 can utilize the same materials which develop water repellency as mentioned in connection with Invention 1. The coating method is the same as well. Therefore, the description is omitted here.

Each of these compounds is a water repellent material having a straight-chain structure. Owing to the presence of a functional group with a high bonding force, each compound is capable of imparting good snow/ice sliding properties to the coating layer, along with durability. Moreover, when these coating compositions are applied to the inorganic base film whose major component is silicone, the silicone is bonded to any of the three types of water repellent materials by a siloxane bond. This bonding shows a remarkably strong bonding force and results in excellent snow/ice sliding properties and durability.

Preferably, the fluorine-free silane compound has a methyl group (Claim 21). As described earlier, with respect to the straight-chain water repellent materials each having a terminal methyl group, the methyl group is a relatively small functional group. Thus, the straight-chain water repellent materials can be densely immobilized on the top surface of the substrate. Besides, since each terminal has a small functional group, the straight-chain structure is readily mobile. As a result, it is possible to develop high snow/ice sliding properties from the initial stage.

As for the hydrophilic material, the same materials as mentioned with respect to Invention 1 are applicable.

As for the materials for the substrate, the same materials as mentioned with respect to Invention 1 are applicable.

**BRIEF DESCRIPTION OF DRAWINGS**

Fig. 1 is an explanatory perspective view of a testing device employed for measurement of the load required for sliding movement of ice and for examination of the condition of the ice sliding movement. Fig. 2 is a sectional view taken along the line A-A in Fig. 1.

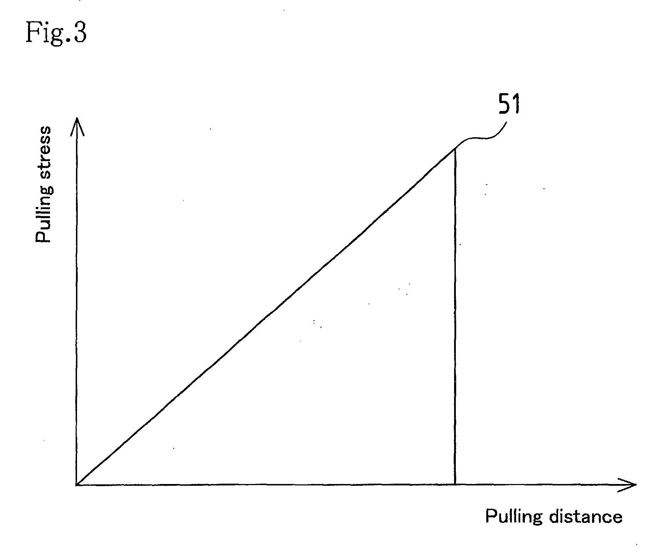

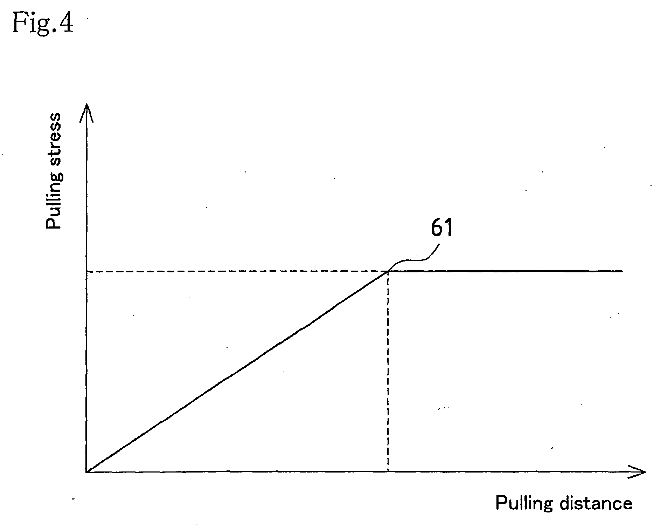

Fig. 3 is a load transition model in the case where ice detached with a fracture (indicated as "fractured detachment"), which is observed during the tests for measurement of the load required for sliding movement of ice and for examination of the condition of the ice sliding movement. Fig. 4 is a load transition model in the case where ice slid in an unfractured manner under a constant load (indicated as "constant-load, unfractured sliding movement"), which is observed during the tests for measurement of the load required for sliding movement of ice and for examination of the condition of the ice sliding movement.

Fig. 5 is a table showing the results of the evaluation test and the snow/ice accretion test concerning Examples and Comparative Examples which correspond to Invention 1.

Fig. 6 is a table showing the results of the evaluation test and the snow/ice accretion test concerning Examples and Comparative Examples which correspond to Invention 2.

**BEST MODE FOR CARRYING OUT THE INVENTION**

For more detailed description, the present invention is hereinafter described in a more specific manner by way of Examples below.

First of all, Invention 1 is related by way of Examples 1 to 10 and Comparative Examples 1 to 6.

With respect to Example 8, Comparative Example 3 and Comparative Example 6, glass plates (100 mm x 100 mm, thickness: 1.5 mm) were used as the substrates to be coated or as the material to be measured. For the rest of Examples and Comparative Examples, polycarbonate plates (100 mm x 100 mm, thickness: 3.0 mm) each covered with a silicone-based base film were subjected to sufficient corona discharge treatment until their surface became activated (hydrophilic). These glass plates were used as the substrates.

[Example 1]

A coating composition for the water repellent film was obtained by diluting a fluorosilicone coating composition, X-24-9270 (manufactured by Shin-Etsu Chemical Co., Ltd.), to a solid matter content of about 2.0%. Next, the polycarbonate plate was immersed in a bath containing the coating composition for the water repellent film, and pulled out at about 5 mm/min. After dried at room temperature, the plate was thermally treated at around 80°C for about 30 minutes to give a covering of Example 1.

[Example 2]

A coating composition for the water repellent film was obtained by diluting a fluorosilicone coating composition, X-24-7890 (manufactured by Shin-Etsu Chemical Co., Ltd.), to a solid matter content of about 1.0%. Except for this, a covering of Example 2 was obtained in the same manner as in Example 1.

[Example 3]

A coating composition for the water repellent film was mainly composed of octadecyltriethoxysilane (ODTES), LS6970 (manufactured by Shin-Etsu Chemical Co., Ltd.). In this coating composition for the water repellent film, the mixture ratio was such that $C_{18}H_{37}Si(OC_2H_5)_3$:ethyl alcohol [EtOH] : water [0.01N, RNO$_3$] = 1:150:8, approximately. The mixture was stirred at room temperature for five hours to give a coating composition for the water repellent film. Next, in the atmosphere where the relative humidity was about 10% or lower, the polycarbonate plate was immersed into a bath containing the coating composition for the water repellent film, and pulled out at about 10 mm/min. After dried at room temperature, the plate was thermally treated at around 60°C for about 30 minutes to give a covering of Example 3.

[Example 4]

A coating composition for the water repellent film was mainly composed of heptadecafluorodecyltriethoxysilane (FAS), TSL8233 (manufactured by GE Toshiba Silicones). In this coating composition for the water repellent film, the mixture ratio was such that $C_8F_{17}C_2H_4Si(OC_2H_5)_3$:ethyl alcohol [EtOH]:water [0.01N, HNO$_3$] = 1:30:2, approximately. The mixture was stirred at room temperature for five hours to give a coating composition for the water repellent film. Next, in the atmosphere where the relative humidity was about 10% or lower, the polycarbonate plate was immersed into a bath containing the coating composition for the water repellent film, and pulled out at about 10 mm/min. After dried at room temperature, the plate was thermally treated at around 80°C for about 30 minutes to give a covering of Example 4.

[Example 5]

A coating composition for the water repellent film was mainly composed of heptadecafluorodecyltrichlorosilane (HDFDTCS), KBM7803 (manufactured by Shin-Etsu Chemical Co., Ltd.). In this coating composition for the water repellent film, the mixture ratio was such that $C_8F_{17}C_2H_4SiCl_3$:silicone oil (CF994, manufactured by Shin-Etsu Chemical Co., Ltd.) = 1:99, approximately. Next, in the atmosphere where the relative humidity was about 10% or lower, the polycarbonate plate was immersed into a bath containing the coating composition for the water repellent film, for about 45 minutes. After dried at room temperature, the plate was thermally treated at around 60°C for about 30 minutes to give a covering of Example 5.

[Example 6]

A covering of Example 6 was obtained in the same manner as in Example 5, except that the polycarbonate plate was immersed in the bath containing the coating composition for the water repellent film for about 20 minutes.

[Example 7]

A covering of Example 7 was obtained in the same manner as in Example 5, except that the polycarbonate plate was immersed in the bath containing the coating composition for the water repellent film for about 10 minutes.

[Example 8]

A covering of Example 8 was obtained in the same manner as in Example 5, except that the glass plate for the substrate to be coated was ultrasonically washed well, before immersed in a bath containing the coating composition for the water repellent film.

[Example 9]

A coating composition for the hydrophilic film was mainly composed of tetraethoxysilane (TEOS), LS2340 (manufactured by Shin-Etsu Chemical Co., Ltd.). In this coating composition for the hydrophilic film, the mixture ratio was such that $Si(OC_2H_5)_4$:ethyl alcohol [EtOH]:water [0.01N, HCl] = 1:20:8, approximately. The mixture was stirred at room temperature for five hours to give a coating composition for the hydrophilic film. Next, in the atmosphere where the relative humidity was about 10% or lower, the polycarbonate plate was immersed into a bath containing the coating composition for the hydrophilic film, and pulled out at about 10 mm/min. After dried at room temperature, the plate was thermally treated at around 60°C for about 30 minutes to give a hydrophilic film-covered polycarbonate plate. Further, a coating composition for the water repellent film was mainly composed of heptadecafluorodecyltrichlorosilane (HDFDTCS), KBM7803 (manufactured by Shin-Etsu Chemical Co., Ltd.). In this coating composition for the water repellent film, the mixture ratio was such that $C_8F_{17}C_2H_4SiCl_3$:silicone oil (KF994, manufactured by Shin-Etsu Chemical Co., Ltd.) = 1:99, approximately. Then, in the atmosphere where the relative humidity was about 10% or lower, the hydrophilic film-covered polycarbonate plate was immersed into a bath containing the coating composition for the water repellent film, for about 20 minutes as in Example 6. After dried at room temperature, the plate was thermally treated at around 60°C for about 30 minutes to give a covering of Example 9.

[Example 10}

Forty (40) parts by weight of chlorotrifluoroethylene-based fluororesin (Zaflon FC110, manufactured by Toagosei Co., Ltd.) were dissolved into a mixed solvent in which xylene, toluene, ethyl acetate, and methyl isobutyl ketone were blended at a proportion of 3:1:1:1. Thereafter, the mixture was stirred at room temperature for 20 minutes. Further added to this mixture were 5 parts by weight of an isocyanate curing agent (Coronate 2515, manufactured by Toagosei Co., Ltd.). Additional 10-minute stirring gave a coating composition for the water repellent film. Next, the polycarbonate plate was immersed in a bath containing the coating composition for the water repellent film, and pulled out at about 5 mm/min. After dried at room temperature, the plate was thermally treated at around 100°C for about 30 minutes to give a covering of Example 10.

(Comparative Example 1)

Aluminum-sec-butoxide [Al(O-sec-Bu)$_3$] and isopropyl alcohol [IPA] were stirred at room temperature for about an hour. Further, ethyl acetoacetate [EAcAc] was added and stirred for about an hour. Thereafter, water [0.01N, HNO$_3$] and isopropyl alcohol [IPA] were added to make such a mixture that Al(O-sec-Bu)$_3$:IPA:EAcAc:0.01N, HNO$_3$ = 1:30:1: 2 (molar ratio). This mixture was stirred for about five hours. Thus prepared was an alumina sol solution to be used as a coating composition for formation of a trasnparent alumina film.

In the thus prepared coating composition for formation of a trasnparent alumina film, the polycarbonate plate was immersed, and pulled out therefrom at about 300 mm/min to form a coating film on the polycarbonate plate. After about 30 minutes of aging at room temperature, the plate was immersed in hot water of around 80°C and pulled out about 30 minutes later. This plate was dried at room temperature for about 60 minutes, thereby giving a polycarbonate plate having a transparent alumina thin film. Further, a coating composition for the water repellent film was obtained by diluting a fluorosilicone coating composition, KP-801M (manufactured by Shin-Etsu Chemical Co., Ltd.), to a solid matter content of about 0.5%. Then, the polycarbonate plate having a transparent alumina thin film was subjected to sufficient corona discharge treatment until the contact angle reached about 3 degrees relative to water. At this stage, the plate was immersed in a bath containing the coating composition for the water repellent film, and pulled out at about 5 mm/min. After dried at room temperature, the plate was thermally treated at around 60°C for about 30 minutes to form a water repellent film on the petal-like transparent alumina thin film. Thus obtained was a covering of Comparative Example 1.

(Comparative Example 2)

A coating composition for the water repellent film was obtained by diluting a fluorosilicone coating composition, KP-801M (manufactured by Shin-Etsu Chemical Co., Ltd.), to a solid matter content of about 0.5%. Next, the polycarbonate plate was immersed in a bath containing the coating composition for the water repellent film, and pulled out at about 5 mm/min. After dried at room temperature, the plate was thermally treated at around 60°C for about 30 minutes to give a covering of Comparative Example 2.

(Comparative Example 3)

A covering of Comparative Example 3 was obtained in the same manner as in Comparative Example 2, except that the glass plate for the substrate to be coated was ultrasonically washed well, before immersed in a bath containing the coating composition for the water repellent film.

(Comparative Example 4)

To prepare a coating composition for the water repellent film, 66 grams of 1,1,2-trichloro-1,2,2-trifluoroethane ($Cl_2FCCClF_2$) were added relative to 1 gram of fluorinated pitch ($C_6F_6$), and stirred at room temperature for 24 hours. Next, the polycarbonate plate was immersed therein, and pulled out at about 1 mm/min. The plate was dried at room temperature to give a covering of comparative Example 4.

(Comparative Example 5)

To prepare a coating composition for the water repellent film, graphite fluoride powders (unbonded fluorine content: 3% by weight or less, average particle size: 5 μm) were mixed with an acrylic silicone resin such that the volume fraction was 60% after vapolization of volatile components. The mixture was diluted with a suitable organic solvent so as to be applied properly by a spray, thereby giving a coating composition for the water repellent film. This composition was sprayed onto the polycarbonate plate and dried at room temperature. Thus obtained was a covering of Comparative Example 5.

(Comparative Example 6)

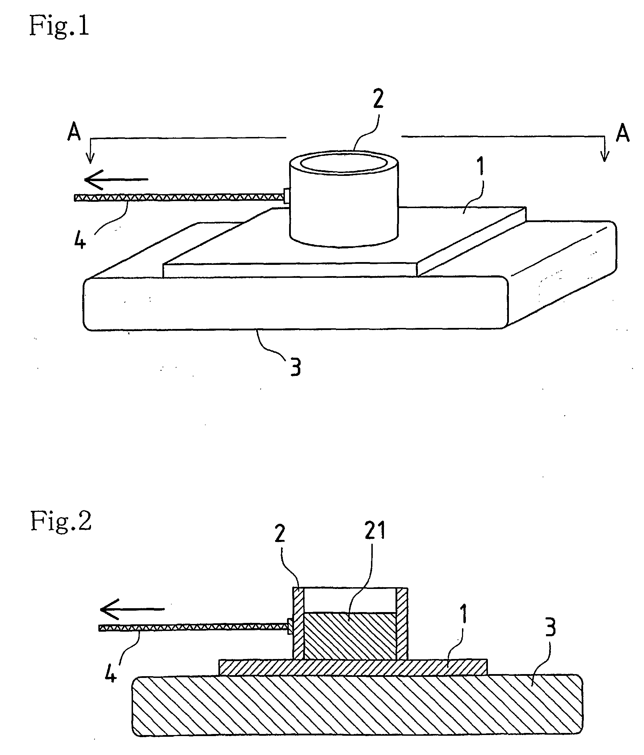

The glass plate to be used was not treated in any particular manner.
With respect to each of Examples and Comparative Examples as above, the area proportion of the water repellent materials was calculated from the molar ratio measured by an X-ray photoelectron spectrometer (ESCA5400, manufactured by ULVAC-PHI, Inc.).
Further with respect to each of these Examples and Comparative Examples, water repellency and water sliding properties were measured. Water repellency was determined by the angle of contact between a waterdrop and each covering, the contact angle being measured in the atmosphere with the use of a contact angle meter. As for the measurement of water sliding properties, a waterdrop was dropped on the external surface of each covering. After the waterdrop became stationary, the covering was tilted gradually. At the moment when the waterdrop started to move on the external surface of the covering, the angle between the external surface of the covering and the horizontal plane was measured as the sliding angle. It should be understood that the term "sliding down" indicates the state where a waterdrop moves on the tilted surface, with the same part of the waterdrop touching the external surface of the covering, whereas the term "rolling down" means the state where a waterdrop moves in a rolling manner on the surface. Additionally, after a waterdrop started to move on the external surface of the covering, the travel distance and time of the waterdrop was measured between any two points. The measured travel distance and time were utilized for calculation of the sliding speed.
Further regarding each of these Examples and Comparative Examples, the load required to trigger detachment or sliding movement of ice was measured. At the same time, the condition of such ice detachment or sliding movement was examined as well. Fig. 1 is an explanatory perspective view of the testing device. Fig. 2 is a sectional view taken along the line A-A in Fig. 1.
In a thermostatic chamber, a covering 1 was fixed on a horizontal test board 3, and a teflon ring 2 was mounted on the covering 1. With the teflon ring 2 being filled with water, the thermostatic chamber was cooled down to ~5°C, so that ice 21 froze stuck to the covering 1. After the testing device was left still for a predetermined period of time, the ice 21 on the covering 1, together with the teflon ring 2, was pulled with a rope 4. The pulling operation was carried out in the -5°C atmosphere, in a direction parallel to the external surface of the covering 1 (the direction of the arrow). During this pulling operation, transition of the load was observed. Fig. 3 shows a load transition model according to this test. The model shown in Fig. 3 represents the case where the whole load was removed at the moment 51 when attached ice started to move (indicated as "fractured detachment"). On the other hand, the model shown in Fig. 4 represents the case where the load was generally constant even after the moment 61 when attached ice started to move (indicated as "constant-load, unfractured sliding movement").

Moreover, regarding each of these Examples and Comparative Examples, the maximum surface roughness was measured by means of a surface roughness tester.

As the snow/ice accretion test to check the actual degree of snow/ice accretion, the coverings concerning Examples and Comparative Examples were installed at the same location, at the same time of the year (to be specific, in the Hokkaido region in winter). In the installed state, the external surface of each covering was vertical to the ground surface. The degree of snow/ice accretion was represented by the snow/ice accretion rate. A covering with a lower snow/ice accretion rate is judged to have more prominent snow/ice accretion resistance (snow/ice sliding properties). The snow/ice accretion rate was calculated according to the following formula (1), wherein the snow/ice accretion time means the time during which accretion of snow and ice is observed on the objects to be measured, and the total precipitation time is the time during which precipitation such as rainfall or snowfall is observed.

$$\text{Snow/ice accretion rate} = \frac{\text{snow/ice accretion time}}{\text{total precipitation time}} \times 100 \qquad (1)$$

A covering with a smaller snow/ice accretion rate is judged to have more prominent snow/ice accretion resistance (snow/ice sliding properties). In this snow/ice accretion test, the total precipitation time was about 3,000 hours, most of which was accounted for by snowfall.

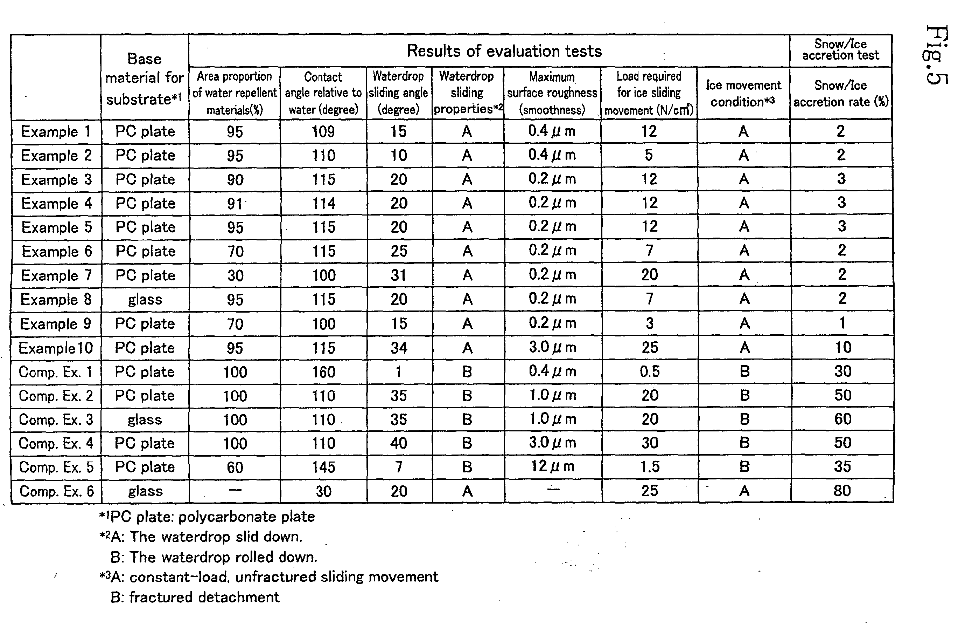

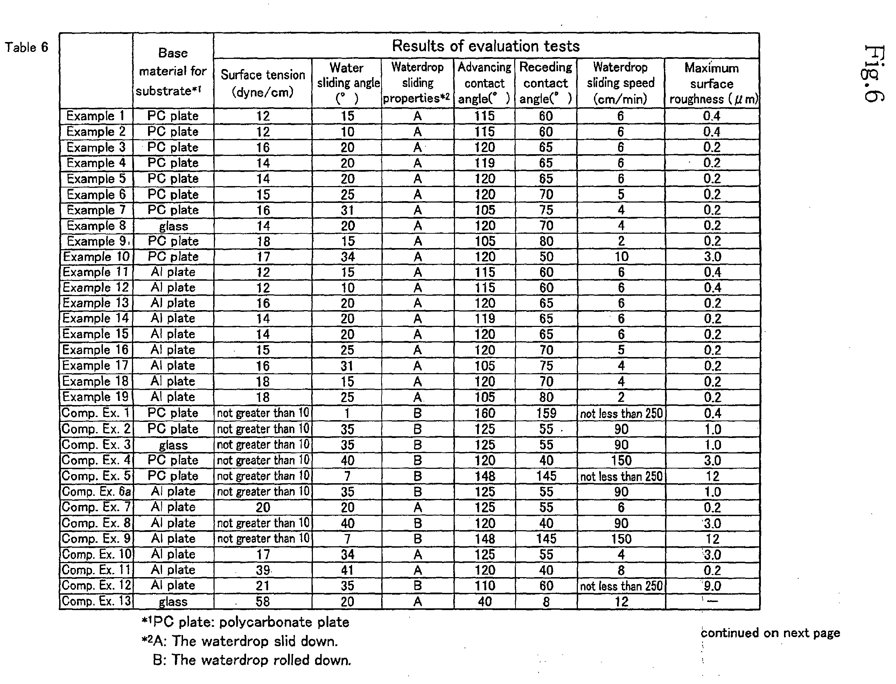

The test results concerning above Examples and Comparative Examples are compiled in the table of Fig. 5.

As seen in the table, the external surface of the coating layer showed excellent snow/ice sliding properties and proved the effect of preventing snow/ice accretion, under the following conditions. For one, the external surface had such wettability that the contact angle relative to water was 70 degrees or greater, preferably 90 degrees or greater. For another, a waterdrop was allowed to slide down at a sliding angle of 40 degrees or less, preferably 30 degrees or less.

Comparative Example 1 marked a high water repellency. Actually, for a while after installation, it showed a notable snow/ice accretion resistance. However, snow and ice began to accrue as the time went by and the final snow/ice accretion rate was higher than that of any Examples. Judging from this result, Comparative Example 1 lost its high water repellency for some reason (e.g. deposition of contaminants) and failed to maintain the effect of preventing snow/ice accretion. Moreover, from the fact that a waterdrop rolled down from the external surface of the covering, it is also found that the snow/ice sliding properties could no longer be expected after the loss of the high water repellency.

Referring to Comparative Example 5 whose maximum surface roughness was 12 μm, the snow/ice accretion rate was as high as 35%. On the other hand, where the external surface of the coating layer was smooth enough to show the maximum surface roughness of 10 μm or less, preferably 1 μm or less, the effect of preventing snow/ice accretion improved further. Incidentally, the evaluation tests concerning Table 1 were conducted after ice had frozen stuck at -5°C. It should be borne in mind that the results of these evaluation tests reflect snow/ice accretion properties in the actual installation conditions. Hence, the effect of preventing snow/ice accretion on the coating layer can be judged in terms of sliding properties for snow and ice which froze stuck in the atmospheric temperature between -2°C to -5°C, preferably at -5°C.

Next, Invention 2 is related by way of Examples 1 to 19 and Comparative Examples 1 to 13.

Examples 1 to 10 and Comparative Examples 1 to 5 are identical to those mentioned earlier, and therefore not discussed here.

[Example 11]

An aluminum plate (100 mm x 100 mm, thickness: 0.8 mm) was subjected to a chromate treatment. An epoxy-based primer was sprayed onto the external surface of this plate and cured under heating at about 150°C for 30 minutes. Further on this external surface, a urethane-based coating composition was sprayed and cured under heating at about 150°C for 30 minutes. Additionally sprayed on top of this external surface was a silicone coating composition, KP854 (manufactured by Shin-Etsu Chemical Co., Ltd.). After the solvent was dried off at room temperature, the sprayed coating was cured under heating at about 100°C for 30 minutes. The resulting substrate was composed of a urethane-coated aluminum plate which was further covered with an inorganic base film. For formation of the coating layer, the same coating composition as used in Example 1 was sprayed on this inorganic base film, with the discharge amount and the discharge pressure being minimized to the limit. After the solvent was dried off at room temperature, the substrate was thermally treated at about 80°C for 30 minutes to give a covering of Example 11.

[Example 12]

A covering of Example 12 was obtained in the same manner as in Example 11, except that the coating layer was formed with the coating composition used in Example 2.

[Example 13]

In the procedure of Example 11, the coating layer was formed with the coating composition used in Example 3. This coating composition was sprayed onto the inorganic base film which was provided on the same substrate as used in Example 11. The spray coating was carried out in the atmosphere where the relative humidity was about 10% or lower, with the discharge amount and the discharge pressure being minimized to the limit. After the solvent was dried off at room temperature, the substrate was thermally treated at about 60°C for 30 minutes to give a covering of Example 13.

[Example 14]

In the procedure of Example 11, the coating layer was formed with the coating composition used in Example 4. This coating composition was sprayed onto the inorganic base film which was provided on the same substrate as used in Example 11. The spray coating was carried out in the atmosphere where the relative humidity was about 10% or lower, with the discharge amount and the discharge pressure being minimized to the limit. After the solvent was dried off at room temperature, the substrate was thermally treated at about 60°C for 30 minutes to give a covering of Example 14.

[Example 15]

In the procedure of Example 11, the coating layer was formed with the coating composition used in Example 5. This coating composition was sprayed onto the inorganic base film which was provided on the same substrate as used in Example 11. The spray coating was carried out in the atmosphere where the relative humidity was about 10% or lower, with the discharge amount and the discharge pressure being minimized to the limit. The solvent was then dried off at room temperature. After the process of spray coating and solvent drying was repeated five times, the substrate was thermally treated at about. 60°C for 30 minutes to give a covering of Example 15.

[Example 16]

Similar to Example 15, the coating composition for formation of the coating layer was sprayed onto the inorganic base film which was provided on the same substrate as used in Example 11, with the discharge amount and the discharge pressure being minimized to the limit. The solvent was then dried off at room temperature. Except for repeating the process of spray coating and solvent drying three times, the process of Example 15 was followed to give a covering of Example 16.

[Example 17]

Similar to Example 15, the coating composition was sprayed onto the inorganic base film which was provided on the same substrate as used in Example 11, with the discharge amount and the discharge pressure being minimized to the limit. The solvent was then dried off at room temperature. Except for repeating the process of spray coating and solvent drying twice, the process of Example 15 was followed to give a covering of Example 17.

[Example 18]

For formation of the hydrophilic film, the coating composition used in Example 9 was sprayed onto the inorganic base film which was provided on the same substrate as used in Example 11. The spray coating was carried out in the atmosphere where the relative humidity was about 10% or lower, with the discharge amount and the discharge pressure being minimized to the limit. After the solvent was dried off at room temperature, the substrate was thermally treated at about 60°C for 30 minutes to give a coated plate having a hydrophilic coating on the external surface. Further, for formation of the coating layer, the coating composition used in Example 9 was sprayed onto the external surface of the above-mentioned coated plate. The spray coating was carried out in the atmosphere where the relative humidity was about 10% or lower, with the discharge amount and the discharge pressure being minimized to the limit. The solvent was then dried off at room temperature. After the process of spray coating and solvent drying was repeated five times, the substrate was thermally treated at about 60°C for 30 minutes to give a covering of Example 18.

[Example 19]

A coating composition was mainly composed of an alkylsilane, KBM-7103 (manufactured by Shin-Etsu Chemical Co., Ltd.). In this coating composition for formation of the coating layer, the mixture ratio was such that $CF_3C_2H_4Si$ $(OCH_3)_3$:ethyl alcohol [EtOH] : water [0.01N, $HNO_3$] = 1:150:8, approximately. The mixture was stirred at room temperature for five hours to give a coating composition for formation of the coating layer. Later, this coating composition was sprayed onto the inorganic base film which was provided on the same substrate as used in Example 11. The spray coating was carried out in the atmosphere where the relative humidity was about 10% or lower, with the discharge amount and the discharge pressure being minimized to the limit. After the solvent was dried off at room temperature, the substrate was thermally treated at about 60°C for 30 minutes to give a covering of Example 19.

(Comparative Example 6a)

The coating layer was formed with the same coating composition as used in Comparative Example 2. This coating composition was sprayed onto the inorganic base film which was provided on the same substrate as used in Example 11. The spray coating was carried out in the atmosphere where the relative humidity was about 10% or lower, with the discharge amount and the discharge pressure being minimized to the limit. After the solvent was dried off at room temperature, the substrate was thermally treated at about 60°C for 30 minutes to give a covering of Comparative Example 6a.

(Comparative Example 7)

An aluminum plate (100 mm x 100 mm, thickness: 0.8 mm) was subjected to a chromate treatment. An epoxy-based primer was sprayed onto the external surface of this plate and cured under heating at about 150°C for 30 minutes. Further on this external surface, a urethane-based coating composition was sprayed and cured under heating at about 150°C for 30 minutes. This urethane-coated aluminum plate was used as the substrate. Next, for formation of the coating layer, the same coating composition as used in Example 5 was sprayed onto this substrate. The spray coating was carried out in the atmosphere where the relative humidity was about 10% or lower, with the discharge amount and the discharge pressure being minimized to the limit. The solvent was then dried off at room temperature. After the process of spray coating and solvent drying was repeated five times, the substrate was thermally treated at about 60°C for 30 minutes to give a covering of Comparative Example 7.

(Comparative Example 8)

For formation of the coating layer, the same coating composition as used in Comparative Example 4 was sprayed onto the inorganic base film which was provided on the same substrate as used in Example 11, with the discharge amount and the discharge pressure being minimized to the limit. After the solvent was dried off at room temperature, a covering of Comparative Example 8 was obtained.

(Comparative Example 9)

For formation of the coating layer, the same coating composition as used in Comparative Example 5 was sprayed onto the inorganic base film which was provided on the same substrate as used in Example 11, with the discharge amount and the discharge pressure being minimized to the limit. After the solvent was dried off at room temperature, a covering of Comparative Example 9 was obtained.

(Comparative Example 10)

For formation of the coating layer, the same coating composition as used in Example 10 was sprayed onto the inorganic base film which was provided on the same substrate as used in Example 11, with the discharge amount and the discharge pressure being minimized to the limit. After the solvent was dried off at room temperature, the substrate was thermally treated at about 100°C for 30 minutes to give a covering of Comparative Example 10.

(Comparative Example 11)

Similar to Example 15, the spray coating was effected on the inorganic base film which was provided on the same substrate as used in Example 11, and then the solvent was dried at room temperature. Except that the process of spray coating and solvent drying was performed not more than once, a covering of Comparative Example 11 was obtained in the same manner.

(Comparative Example 12)

An aluminum plate (100 mm x 100 mm, thickness: 0.8 mm) was subjected to a chromate treatment. An epoxy-based primer was sprayed onto the external surface of this plate and cured under heating at about 150°C for 30 minutes. Further on this external surface, a urethane-based coating composition was sprayed and cured under heating at about 150°C for 30 minutes. This urethane-coated aluminum plate was employed.

(Comparative Example 13)

The glass plate to be used (100 mm x 100 mm, thickness: 1.5 mm) was not treated in any particular manner, except for sufficient ultrasonic washing of its external surface.

With respect to each of Examples and Comparative Examples as above, physical properties of the external surface were measured.

The surface tension was obtained by measuring the reagent leakage index on the external surface of each covering in the atmosphere, according to the manner mentioned in JIS K6768. The surface tension tests were carried out before and after the snow/ice accretion test in the Hokkaido region.

To measure the advancing contact angle and the receding contact angle, a waterdrop was video recorded while moving on the external surface of the covering. Based on the recorded image taken just before the waterdrop started to move, the state of the waterdrop was observed for the respective contact angles.

Concerning each of these Examples and Comparative Examples, the length of the straight-chain water repellent materials was obtained. The length was assumed from the molecular weight of the major constituent of the coating layer which was contained in the coating composition for formation of the coating layer.

With respect to each of these Examples and Comparative Examples, the area proportion of the water repellent materials was calculated from the molar ratio measured by an X-ray photoelectron spectrometer (ESCA5400, manufactured by ULVAC-PHI, Inc.). The density of the straight-chain water repellent materials which were immobilized on the surface was obtained as the proportion relative to the saturated density.

For examination of the durability of snow/ice sliding properties, the surface tension was measured before and after the snow/ice accretion test and the results were compared with each other.

As for water sliding properties, sliding speed, maximum surface roughness, measurement of a load required for ice detachment or sliding movement, examination of the condition of the ice detachment or sliding movement, and snow/ice accretion rate, the tests were conducted in the same manner as done for Examples and Comparative Examples mentioned earlier in connection with Invention 1. Hence, description of the test methods is omitted here.

In this snow/ice accretion test, the total precipitation time was about 1,000 hours, most of which was accounted for by snowfall.

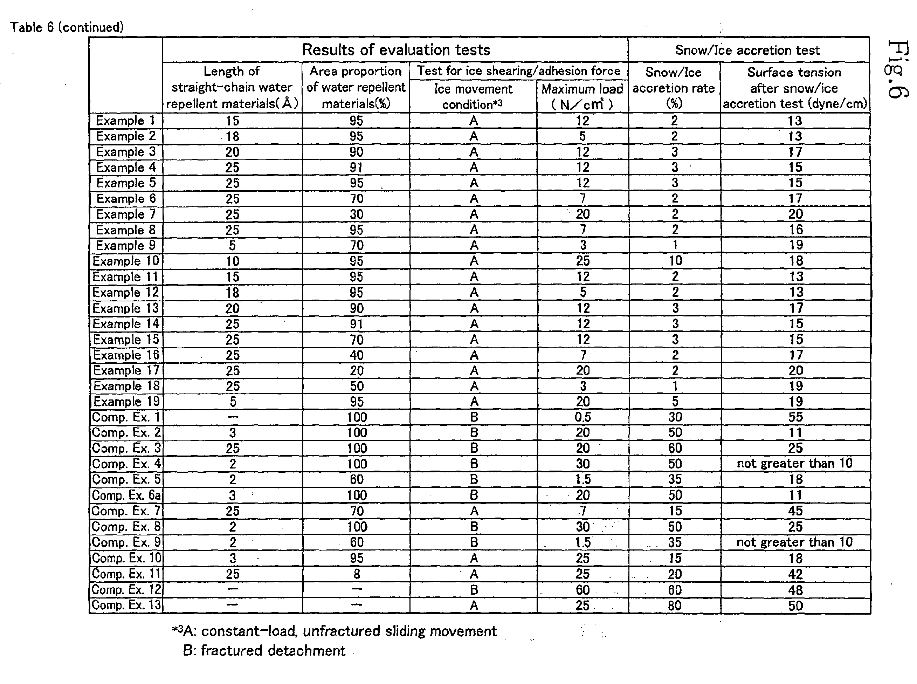

The test results concerning above Examples and Comparative Examples are compiled in the table of Fig. 6.

For evaluation of the snow/ice accretion tests, coverings which showed a snow/ice accretion rate of 10% or less are considered excellent in snow/ice accretion resistance. As seen from the results in the table, the snow/ice accretion rates were low with the coverings of Examples 1 to 19 whose external surface showed a surface tension not greater than 35 dyne/cm and a waterdrop sliding angle not greater than 40 degrees. The results confirm that the external surface of any coating layer concerning the present invention shows remarkable snow/ice sliding properties and the effect of preventing snow/ice accretion.

Referring to Comparative Examples 7 and 10, each external surface showed a surface tension not greater than 35 dyne/cm and a waterdrop sliding angle not greater than 40 degrees. However, in the case of Comparative Example 7, the urethane-based coating layer was directly covered by the coating layer having snow/ice sliding properties. This structure did not contain a strong siloxane bond which was achieved in Examples of the present invention. Therefore, the straight-chain water repellent materials were released from the substrate over time, so that the coating layer eventually failed to develop the snow/ice sliding properties. As a result, the final snow/ice accretion rate rose to a little high level of 15%. Besides, release of the water repellent materials caused deterioration of the coating layer, which led to a marked drop in the snow/ice accretion resistance at the early stage. This is evidenced by the result that the surface tension was 20 dyne/cm before the snow/ice accretion test, but rose to as high as 45 dyne/cm after 1,000 hours of the test. Further referring to the table for Comparative Example 10, in which the length of the straight-chain water repellent materials was 3 Å, the final snow/ice accretion rate reached a little high level of 15%. Focusing on the length of the straight-chain water repellent materials, all of Examples 1 to 19 satisfied the length of 5 Å or longer and exhibited high snow/ice accretion rates. In the case of Comparative Example 10, however, the length was not 5 Å or longer against the requirement in Examples concerning the present invention. This is apparently the reason why the snow/ice accretion rate of Comparative Example 10 was somewhat higher than those recorded in Examples, despite the fact that Comparative Example 10 was better in snow/ice accretion resistance than the rest of Comparative Examples. This result proves that a preferable length of the straight-chain water repellent materials is 5 Å or longer.

From another point of view, all of Examples 1 to 19, which showed high snow/ice accretion resistance, allowed a waterdrop to slide down along the external surfaces of the coverings. On the other hand, Comparative Examples 1 to 6, 8, 9 and 12, in which a waterdrop rolled down, showed high snow/ice accretion rates ranging from 30 to 60%.

The evaluation tests concerning these Examples and Comparative Examples were also conducted after ice had frozen stuck at -5°C. It should be borne in mind that the results of these evaluation tests reflect snow/ice accretion properties in the actual installation conditions. Hence, the effect of preventing snow/ice accretion on the coating layer can be judged in terms of sliding properties for snow and ice which froze stuck in the atmospheric temperature between -2°C to -5°C, preferably at -5°C.

As mentioned earlier, one of the features of the present invention is to allow a waterdrop to slide at an advancing contact angle of 90 degrees or greater, and at a receding contact angle of 50 degrees or greater but smaller than the advancing contact angle. It should be noted that all of Examples 1 to 19 fall in this scope and reflect snow/ice accretion properties in the actual installation conditions. As another feature, the waterdrop sliding speed is not faster than 10 cm/min. All of Examples 1 to 19 also fall in this scope and reflect snow/ice accretion properties in the actual installation conditions.

Now, referring to Comparative Example 11 whose area proportion of the water repellent materials was 8%, the surface tension was 39 dyne/cm. As found out from this result, the surface tension does not decrease enough if the area proportion of the water repellent materials (i.e. the proportion of the straight-chain water repellent materials relative to the density at which immobilized water repellent materials are saturated) is below 10%. Besides, the snow/ice accretion rate in Comparative Example 11 was a little high level of 20%.

Turning to Examples 1 to 19 according to the present invention, the surface tension after 1,000 hours of snow/ice accretion test showed merely a slight change, and remained almost unchanged, in comparison with the initial value. As found out from this result, although snow/ice sliding properties decline due to deposition of contaminants, deterioration of the coating layer or the like, the degree of decline is so small that the snow/ice accretion resistance can be retained for a long period.

As shown by the above results, even when snow and ice builds up on the external surface of the coating layer, each of the coverings with snow and ice sliding properties according to Inventions 1 and 2 can allow the attached snow and ice to slide down quickly, owing to the snow/ice sliding properties imparted to the external surface of the coating layer. Hence, the water repellency at the super water repellent level is not required in preventing accretion of snow and ice. In fact, attached snow and ice can be made to slide down quickly by means of the coating layer which is formed in a relatively inexpensive and simple manner, so that the snow/ice accretion time can be reduced to a shortest possible period. In this way, it is possible to control snow/ice accretion.

Where the covering of the present invention is installed outdoor, contaminants may be attached to the external surface of the covering. Even in this situation, it is improbable that the contaminant particles spread evenly over the entire external surface of the coating layer. Since the area with snow/ice sliding properties remains exposed on a microscopic scale, the snow/ice sliding properties are not so seriously impaired. Moreover, since the contaminants are removed together with the snow and ice which slides down along the external surface of the covering, the contaminants are not allowed to accumulate on the external surface of the covering. Thus, the snow/ice sliding properties can be retained for a long period. Lastly, even if the coating film deteriorates, the decline of performances related to snow/ice sliding movement (e.g. surface tension, water sliding properties) is much gentler than loss of water repellency in a super water repellent coating layer. Therefore, the coating film can maintain the effect of preventing snow/ice accretion for a much longer period than a super water repellent coating film.

## INDUSTRIAL APPLICABILITY

As described above, the covering with snow and ice sliding properties according to the present invention is formed on external surfaces of outdoor structures on which adverse influences due to accretion of snow and ice are anticipated, and this covering is advantageously utilized in such applications. Examples of those outdoor structures include tunnel portals, safety barriers for medians, copings for noise walls, trusses for truss bridges, signboards, anti-snowcap panels, signs, mirrors, self-luminous members, shelters, bicycle parkings, illumination lights, arbors, storm/snow shelfs, fences against thrown objects, snow cornice panels for house roofs, parapets at house roofs, solar batteries, blind panels for house balconies or the like, structures for barns and dumping depots, and more. Accordingly, the covering of the present invention is widely applicable to outdoor structures which are exposed to snow and ice, such as road safety structures, architectural structures, and telecommunication facilities in cold snowy regions, and is also useful in overcoming natural environmental problems which are peculiar to cold snowy regions.

**Claims**

1.  A covering with snow and ice sliding properties which has a property of allowing an accretion of snow to slide and which comprises a coating layer formed on a surface of a substrate in order to prevent accretion of snow and ice, **characterized in that** an external surface of the coating layer has such wettability that a contact angle relative to water is 70 degrees or greater, and also has such water sliding property that a waterdrop sliding angle is 40 degrees or less.

2.  A covering with snow and ice sliding properties according to claim 1, wherein the coating layer shows a maximum surface roughness of 10 μm or less.

3.  A covering with snow and ice sliding properties according to claim 1 or 2, wherein the coating layer allows ice to slide in an unfractured manner under a constant load which is applied horizontally relative to the coating layer, with a proviso that the ice has frozen stuck to the external surface of the coating layer within a temperature range from -2°C to -5°C.

4.  A covering with snow and ice sliding properties according to any of claims 1 to 3, wherein the coating layer is made of a material which develops water repellency and whose major component is any one of or a mixture of a fluorine-containing silane compound, a fluorine-free silane compound, and a fluorine-containing silane compound having a fluorocarbon group.

5.  A covering with snow and ice sliding properties according to claim 4, wherein the fluorine-free silane compound has a methyl group.

6.  A covering with snow and ice sliding properties according to any of claims 1 to 4, wherein the material which develops water repellency is evenly distributed over 30% to 95% of the total area of an external surface of the substrate.

7.  A covering with snow and ice sliding properties according to any of claims 1 to 4, wherein the material which develops water repellency is evenly distributed over 30% to 95% of the total area of an external surface of the substrate, and a hydrophilic material is distributed on the external substrate surface at a part where the material which develops water repellency is absent.

8.  A covering with snow and ice sliding properties which has a property of allowing an accretion of snow to slide and which comprises a coating layer formed on a surface of a substrate in order to prevent accretion of snow and ice, **characterized in that** an external surface of the coating layer has such water repellency that a surface tension is 35 dyne/cm or less, and also has such water sliding property that a waterdrop sliding angle is 40 degrees or less.

9.  A covering with snow and ice sliding properties according to claim 8, wherein the coating layer has such water sliding properties that a waterdrop slides down along the external surface of the coating layer at an advancing contact angle of 90 degrees or greater, as well as at a receding contact angle of 50 degrees or greater but smaller than the advancing contact angle.

10. A covering with snow and ice sliding properties according to claim 8 or 9, wherein the coating layer has such water sliding properties that a waterdrop slides down along the external surface of the coating layer at a waterdrop sliding speed of not faster than 10 cm/min, while the waterdrop slides down 10 centimeters from a start point of such downward sliding movement.

11. A covering with snow and ice sliding properties according to any of claims 8 to 10, wherein the coating layer shows a maximum surface roughness of 10 μm or less.

12. A covering with snow and ice sliding properties according to any of claims 8 to 11, wherein the coating layer allows ice to slide in an unfractured manner under a constant load which is applied horizontally relative to the coating layer, with a proviso that the ice has frozen stuck to the external surface of the coating layer within a temperature range from -2°C to -5°C.

13. A covering with snow and ice sliding properties according to any of claims 8 to 12,
wherein the coating layer is formed on an inorganic base film which is provided on the substrate.

14. A covering with snow and ice sliding properties according to claim 13,
wherein the inorganic base film is made of a silicone coating composition whose major component is silicone.

15. A covering with snow and ice sliding properties according to any of claims 8 to 12,
wherein the coating layer contains water repellent materials each having a straight-chain structure of 5 Å or longer, each of the water repellent materials being immobilized on the substrate in such a manner as to orient a terminal thereof to the external surface of the coating layer.

16. A covering with snow and ice sliding properties according to claim 15,
wherein each of the straight-chain water repellent materials has a trifluoromethyl group and/or a methyl group positioned at the terminal, with the trifluoromethyl group and/or the methyl group being oriented to the external surface of the coating layer.

17. A covering with snow and ice sliding properties according to claim 15 or 16,
wherein one or more of the straight-chain water repellent materials are substantially evenly distributed per 20 square angstrom.

18. A covering with snow and ice sliding properties according to claim 15 or 16,
wherein the straight-chain water repellent materials are substantially evenly immobilized on an external surface of the substrate, at a proportion of 10 to 95% relative to a density at which immobilized water repellent materials are saturated.

19. A covering with snow and ice sliding properties according to claim 15 or 16,
wherein the straight-chain water repellent materials are substantially evenly immobilized on an external surface of the substrate, at a proportion of 10 to 95% relative to a density at which immobilized water repellent materials are saturated, and
a hydrophilic material is present on the external substrate surface at a part where the water repellent materials are not immobilized.

20. A covering with snow and ice sliding properties according to any of claims 15 to 19,
wherein the coating layer is made of a material which develops water repellency and whose major component is any one of or a mixture of a fluorine-containing silane compound, a fluorine-free silane compound, and a fluorine-containing silane compound having a fluorocarbon group.

21. A covering with snow and ice sliding properties according to claim 20,
wherein the fluorine-free silane compound has a methyl group.

1. A covering with snow and ice sliding properties which comprises a coating layer formed on a surface of a substrate in order to prevent accretion of snow and ice,
**characterized in that** an external surface of the coating layer has such wettability that a contact angle relative to water is 70 degrees or greater, and also has such water sliding property that a waterdrop sliding angle is 40 degrees or less,
that the coating layer shows a maximum surface roughness of 10 μm or less, and
that the coating layer allows ice to slide in an unfractured manner under a constant load which is applied horizontally relative to the coating layer, with a proviso that the ice has frozen stuck to the external surface of the coating layer within a temperature range from -2°C to -5°C.

2. A covering with snow and ice sliding properties according to claim 1,
wherein the coating layer is made of a material which develops water repellency and whose major component is any one of or a mixture of a fluorine-containing silane compound, a fluorine-free silane compound, and a fluorine-containing silane compound having a fluorocarbon group.

3. A covering with snow and ice sliding properties according to claim 2,
wherein the fluorine-free silane compound has a methyl group.

4. A covering with snow and ice sliding properties according to claim 1 or 2,
   wherein the material which develops water repellency is evenly distributed over 30% to 95% of the total area of an external surface of the substrate.

5. A covering with snow and ice sliding properties according to claim 1 or 2,
   wherein the material which develops water repellency is evenly distributed over 30% to 95% of the total area of an external surface of the substrate, and
   a hydrophilic material is distributed on the external substrate surface at a part where the material which develops water repellency is absent.

6. A covering with snow and ice sliding properties which comprises a coating layer formed on a surface of a substrate in order to prevent accretion of snow and ice,
   **characterized in that** an external surface of the coating layer has such water repellency that a surface tension is 35 dyne/cm or less, and also has such water sliding property that a waterdrop sliding angle is 40 degrees or less,
   that the coating layer shows a maximum surface roughness of 10 µm or less, and
   that the coating layer allows ice to slide in an unfractured manner under a constant load which is applied horizontally relative to the coating layer, with a proviso that the ice has frozen stuck to the external surface of the coating layer within a temperature range from-2°C to -5°C.

7. A covering with snow and ice sliding properties according to claim 6,
   wherein the coating layer has such water sliding properties that a waterdrop slides down along the external surface of the coating layer at an advancing contact angle of 90 degrees or greater, as well as at a receding contact angle of 50 degrees or greater but smaller than the advancing contact angle.

8. A covering with snow and ice sliding properties according to claim 6 or 7,
   wherein the coating layer has such water sliding properties that a waterdrop slides down along the external surface of the coating layer at a waterdrop sliding speed of not faster than 10 cm/min, while the waterdrop slides down 10 centimeters from a start point of such downward sliding movement.

9. A covering with snow and ice sliding properties according to any of claim 6, 7 or 8,
   wherein the coating layer is formed on an inorganic base film which is provided on the substrate.

10. A covering with snow and ice sliding properties according to claim 9,
    wherein the inorganic base film is made of a silicone coating composition whose major component is silicone.

11. A covering with snow and ice sliding properties according to any of claim 6, 7 or 8,
    wherein the coating layer contains water repellent materials each having a straight-chain structure of 5 Å or longer, each of the water repellent materials being immobilized on the substrate in such a manner as to orient a terminal thereof to the external surface of the coating layer.

12. A covering with snow and ice sliding properties according to claim 11,
    wherein each of the straight-chain water repellent materials has a trifluoromethyl group and/or a methyl group positioned at the terminal, and, when the coating layer is formed, the trifluoromethyl group and/or the methyl group are/is oriented to the external surface of the coating layer.

13. A covering with snow and ice sliding properties according to claim 11 or 12,
    wherein one or more of the straight-chain water repellent materials are substantially evenly distributed per 20 square angstrom.

14. A covering with snow and ice sliding properties according to claim 11 or 12,
    wherein the straight-chain water repellent materials are substantially evenly immobilized on an external surface of the substrate, at a proportion of 10 to 95% relative to a density at which immobilized water repellent materials are saturated.

15. A covering with snow and ice sliding properties according to claim 11 or 12,
    wherein the straight-chain water repellent materials are substantially evenly immobilized on an external surface of the substrate, at a proportion of 10 to 95% relative to a density at which immobilized water repellent materials are saturated, and

a hydrophilic material is present on the external substrate surface at a part where the water repellent materials are not immoblized.

**16.** A covering with snow and ice sliding properties according to any of claims 11 to 15,

wherein the coating layer is made of a material which develops water repellency and whose major component is any one of or a mixture of a fluorine-containing silane compound, a fluorine-free silane compound, and a fluorine-containing silane compound having a fluorocarbon group.

**17.** A covering with snow and ice sliding properties according to claim 16,

wherein the fluorine-free silane compound has a methyl group.

EP 1 323 805 A1

Fig.1

Fig.2

Fig.3

Fig.4

Fig.5

| | Base material for substrate*1 | Results of evaluation tests | | | | | | | Snow/Ice accretion test |
|---|---|---|---|---|---|---|---|---|---|
| | | Area proportion of water repellent materials(%) | Contact angle relative to water (degree) | Waterdrop sliding angle (degree) | Waterdrop sliding properties*2 | Maximum surface roughness (smoothness) | Load required for ice sliding movement (N/cm²) | Ice movement condition*3 | Snow/Ice accretion rate (%) |
| Example 1 | PC plate | 95 | 109 | 15 | A | 0.4 $\mu$ m | 12 | A | 2 |
| Example 2 | PC plate | 95 | 110 | 10 | A | 0.4 $\mu$ m | 5 | A | 2 |
| Example 3 | PC plate | 90 | 115 | 20 | A | 0.2 $\mu$ m | 12 | A | 3 |
| Example 4 | PC plate | 91 | 114 | 20 | A | 0.2 $\mu$ m | 12 | A | 3 |
| Example 5 | PC plate | 95 | 115 | 20 | A | 0.2 $\mu$ m | 12 | A | 3 |
| Example 6 | PC plate | 70 | 115 | 25 | A | 0.2 $\mu$ m | 7 | A | 2 |
| Example 7 | PC plate | 30 | 100 | 31 | A | 0.2 $\mu$ m | 20 | A | 2 |
| Example 8 | glass | 95 | 115 | 20 | A | 0.2 $\mu$ m | 7 | A | 2 |
| Example 9 | PC plate | 70 | 100 | 15 | A | 0.2 $\mu$ m | 3 | A | 1 |
| Example10 | PC plate | 95 | 115 | 34 | A | 3.0 $\mu$ m | 25 | A | 10 |
| Comp. Ex. 1 | PC plate | 100 | 160 | 1 | B | 0.4 $\mu$ m | 0.5 | B | 30 |
| Comp. Ex. 2 | PC plate | 100 | 110 | 35 | B | 1.0 $\mu$ m | 20 | B | 50 |
| Comp. Ex. 3 | glass | 100 | 110 | 35 | B | 1.0 $\mu$ m | 20 | B | 60 |
| Comp. Ex. 4 | PC plate | 100 | 110 | 40 | B | 3.0 $\mu$ m | 30 | B | 50 |
| Comp. Ex. 5 | PC plate | 60 | 145 | 7 | B | 12 $\mu$ m | 1.5 | B | 35 |
| Comp. Ex. 6 | glass | — | 30 | 20 | A | — | 25 | A | 80 |

*1PC plate: polycarbonate plate
*2A: The waterdrop slid down.
 B: The waterdrop rolled down.
*3A: constant-load, unfractured sliding movement
 B: fractured detachment

Fig.6

EP 1 323 805 A1

Table 6

| | Base material for substrate*1 | Results of evaluation tests | | | | | | |
|---|---|---|---|---|---|---|---|---|
| | | Surface tension (dyne/cm) | Water sliding angle (°) | Waterdrop sliding properties*2 | Advancing contact angle(°) | Receding contact angle(°) | Waterdrop sliding speed (cm/min) | Maximum surface roughness (μm) |
| Example 1 | PC plate | 12 | 15 | A | 115 | 60 | 6 | 0.4 |
| Example 2 | PC plate | 12 | 10 | A | 115 | 60 | 6 | 0.4 |
| Example 3 | PC plate | 16 | 20 | A | 120 | 65 | 6 | 0.2 |
| Example 4 | PC plate | 14 | 20 | A | 119 | 65 | 6 | 0.2 |
| Example 5 | PC plate | 14 | 20 | A | 120 | 65 | 6 | 0.2 |
| Example 6 | PC plate | 15 | 25 | A | 120 | 70 | 5 | 0.2 |
| Example 7 | PC plate | 16 | 31 | A | 105 | 75 | 4 | 0.2 |
| Example 8 | glass | 14 | 20 | A | 120 | 70 | 4 | 0.2 |
| Example 9 | PC plate | 18 | 15 | A | 105 | 80 | 2 | 0.2 |
| Example 10 | PC plate | 17 | 34 | A | 120 | 50 | 10 | 3.0 |
| Example 11 | Al plate | 12 | 15 | A | 115 | 60 | 6 | 0.4 |
| Example 12 | Al plate | 12 | 10 | A | 115 | 60 | 6 | 0.4 |
| Example 13 | Al plate | 16 | 20 | A | 120 | 65 | 6 | 0.2 |
| Example 14 | Al plate | 14 | 20 | A | 119 | 65 | 6 | 0.2 |
| Example 15 | Al plate | 14 | 20 | A | 120 | 65 | 6 | 0.2 |
| Example 16 | Al plate | 15 | 25 | A | 120 | 70 | 5 | 0.2 |
| Example 17 | Al plate | 16 | 31 | A | 105 | 75 | 4 | 0.2 |
| Example 18 | Al plate | 18 | 15 | A | 120 | 70 | 4 | 0.2 |
| Example 19 | Al plate | 18 | 25 | A | 105 | 80 | 2 | 0.2 |
| Comp. Ex. 1 | PC plate | not greater than 10 | 1 | B | 160 | 159 | not less than 250 | 0.4 |
| Comp. Ex. 2 | PC plate | not greater than 10 | 35 | B | 125 | 55 | 90 | 1.0 |
| Comp. Ex. 3 | glass | not greater than 10 | 35 | B | 125 | 55 | 90 | 1.0 |
| Comp. Ex. 4 | PC plate | not greater than 10 | 40 | B | 120 | 40 | 150 | 3.0 |
| Comp. Ex. 5 | PC plate | not greater than 10 | 7 | B | 148 | 145 | not less than 250 | 12 |
| Comp. Ex. 6a | Al plate | not greater than 10 | 35 | B | 125 | 55 | 90 | 1.0 |
| Comp. Ex. 7 | Al plate | 20 | 20 | A | 125 | 55 | 6 | 0.2 |
| Comp. Ex. 8 | Al plate | not greater than 10 | 40 | B | 120 | 40 | 90 | 3.0 |
| Comp. Ex. 9 | Al plate | not greater than 10 | 7 | B | 148 | 145 | 150 | 12 |
| Comp. Ex. 10 | Al plate | 17 | 34 | A | 125 | 55 | 4 | 3.0 |
| Comp. Ex. 11 | Al plate | 39 | 41 | A | 120 | 40 | 8 | 0.2 |
| Comp. Ex. 12 | Al plate | 21 | 35 | B | 110 | 60 | not less than 250 | 9.0 |
| Comp. Ex. 13 | glass | 58 | 20 | A | 40 | 8 | 12 | — |

*1PC plate: polycarbonate plate
*2A: The waterdrop slid down.
B: The waterdrop rolled down.

Table 6 (continued)

Fig.6

EP 1 323 805 A1

| | Results of evaluation tests | | | | Snow/Ice accretion test | |
| | Length of straight-chain water repellent materials(Å) | Area proportion of water repellent materials(%) | Test for ice shearing/adhesion force | | Snow/Ice accretion rate (%) | Surface tension after snow/ice accretion test (dyne/cm) |
| | | | Ice movement condition*3 | Maximum load (N/cm²) | | |
|---|---|---|---|---|---|---|
| Example 1 | 15 | 95 | A | 12 | 2 | 13 |
| Example 2 | 18 | 95 | A | 5 | 2 | 13 |
| Example 3 | 20 | 90 | A | 12 | 3 | 17 |
| Example 4 | 25 | 91 | A | 12 | 3 | 15 |
| Example 5 | 25 | 95 | A | 12 | 3 | 15 |
| Example 6 | 25 | 70 | A | 7 | 2 | 17 |
| Example 7 | 25 | 30 | A | 20 | 2 | 20 |
| Example 8 | 25 | 95 | A | 7 | 2 | 16 |
| Example 9 | 5 | 70 | A | 3 | 1 | 19 |
| Example 10 | 10 | 95 | A | 25 | 10 | 18 |
| Example 11 | 15 | 95 | A | 12 | 2 | 13 |
| Example 12 | 18 | 95 | A | 5 | 2 | 13 |
| Example 13 | 20 | 90 | A | 12 | 3 | 17 |
| Example 14 | 25 | 91 | A | 12 | 3 | 15 |
| Example 15 | 25 | 70 | A | 12 | 3 | 15 |
| Example 16 | 25 | 40 | A | 7 | 2 | 17 |
| Example 17 | 25 | 20 | A | 20 | 2 | 20 |
| Example 18 | 25 | 50 | A | 3 | 1 | 19 |
| Example 19 | 5 | 95 | A | 20 | 5 | 19 |
| Comp. Ex. 1 | — | 100 | B | 0.5 | 30 | 55 |
| Comp. Ex. 2 | 3 | 100 | B | 20 | 50 | 11 |
| Comp. Ex. 3 | 25 | 100 | B | 20 | 60 | 25 |
| Comp. Ex. 4 | 2 | 100 | B | 30 | 50 | not greater than 10 |
| Comp. Ex. 5 | 2 | 60 | B | 1.5 | 35 | 18 |
| Comp. Ex. 6a | 3 | 100 | B | 20 | 50 | 11 |
| Comp. Ex. 7 | 25 | 70 | A | 7 | 15 | 45 |
| Comp. Ex. 8 | 2 | 100 | B | 30 | 50 | 25 |
| Comp. Ex. 9 | 2 | 60 | B | 1.5 | 35 | not greater than 10 |
| Comp. Ex. 10 | 3 | 95 | A | 25 | 15 | 18 |
| Comp. Ex. 11 | 25 | 8 | A | 25 | 20 | 42 |
| Comp. Ex. 12 | — | — | B | 60 | 60 | 48 |
| Comp. Ex. 13 | — | — | A | 25 | 80 | 50 |

*3A: constant-load, unfractured sliding movement
B: fractured detachment

## INTERNATIONAL SEARCH REPORT

| | International application No. |
|---|---|
| | PCT/JP01/08027 |

| A. CLASSIFICATION OF SUBJECT MATTER |
|---|
| Int.Cl$^7$  C09K3/18, C09D201/00, C09D5/00 |

According to International Patent Classification (IPC) or to both national classification and IPC

| B. FIELDS SEARCHED |
|---|
| Minimum documentation searched (classification system followed by classification symbols) |
| Int.Cl$^7$  C09K3/18, C09D201/00, C09D5/00 |

Documentation searched other than minimum documentation to the extent that such documents are included in the fields searched

Jitsuyo Shinan Koho    1922-1996    Toroku Jitsuyo Shinan Koho  1994-2001
Kokai Jitsuyo Shinan Koho  1971-2001    Jitsuyo Shinan Toroku Koho  1996-2001

Electronic data base consulted during the international search (name of data base and, where practicable, search terms used)

| C. DOCUMENTS CONSIDERED TO BE RELEVANT | | |
|---|---|---|
| Category* | Citation of document, with indication, where appropriate, of the relevant passages | Relevant to claim No. |
| X | JP 2000-144121 A (Ikuo NARUSAWA),<br>26 May, 2000 (26.05.00),<br>Claims 1, 6, 12; Par. No. [0008]; working examples 1<br>to 8  (Family: none) | 1-21 |
| X | JP 2000-144056 A (Ikuo NARUSAWA),<br>26 May, 2000 (26.05.00),<br>Claims 1, 18; Par. No. [0049]; working examples 5, 10<br>to 13  (Family: none) | 1-21 |
| X | JP 2-208382 A (Kansai Paint Co., Ltd.),<br>17 August, 1990 (17.08.90),<br>Claims; working examples 1 to 3  (Family: none) | 1-12 |
| X | JP 2000-8026 A (Ikuo NARUSAWA),<br>11 January, 2000 (11.01.00),<br>working examples 1 to 7  (Family: none) | 1-3,6-15,<br>17-19 |
| X | JP 9-53041 A (Toden Kankyo Engineering K.K.),<br>25 February, 1997 (25.02.97),<br>Claims 1, 4; column 1, line 27; working examples 1 to 6<br>(Family: none) | 1-3,6-12 |

☒ Further documents are listed in the continuation of Box C.    ☐ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier document but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 19 October, 2001 (19.10.01) | 30 October, 2001 (30.10.01) |

| Name and mailing address of the ISA/ | Authorized officer |
|---|---|
| Japanese Patent Office | |
| Facsimile No. | Telephone No. |

Form PCT/ISA/210 (second sheet) (July 1992)

## INTERNATIONAL SEARCH REPORT

| | International application No. |
|---|---|
| | PCT/JP01/08027 |

C (Continuation). DOCUMENTS CONSIDERED TO BE RELEVANT

| Category* | Citation of document, with indication, where appropriate, of the relevant passages | Relevant to claim No. |
|---|---|---|
| X | JP 2000-239601 A (Kansai Paint Co., Ltd.), 05 September, 2000 (05.09.00), working examples 1 to 6 (Family: none) | 1-3,6-12 |
| X | JP 2000-230060 A (Showa Highpolymer Co., Ltd.), 22 August, 2000 (22.08.00), column 24, line 47; working examples 1 to 19 (Family: none) | 1-3,6-12 |
| A | JP 11-300270 A (Matsushita Electric Ind. Co., Ltd.), 02 November, 1999 (02.11.99), working examples 1 to 5 (Family: none) | 1-21 |

Form PCT/ISA/210 (continuation of second sheet) (July 1992)